# EUROPEAN PATENT SPECIFICATION

(11) **EP 4 246 192 B1**
(45) Date of publication and mention of the grant of the patent: **03.12.2025**
(21) Application number: 21900289.6
(22) Date of filing: 06.10.2021
(51) Int. Cl.: G02B 5/02, F21S 2/00, F21V 5/00, G02F 1/13357

(54) **LIGHT DIFFUSION SHEET, BACKLIGHT UNIT, LIQUID CRYSTAL DISPLAY DEVICE, INFORMATION APPARATUS, AND METHOD FOR MANUFACTURING LIGHT DIFFUSION SHEET**
LICHTDIFFUSIONSFOLIE, RÜCKBELEUCHTUNGSEINHEIT, FLÜSSIGKRISTALLANZEIGEVORRICHTUNG, INFORMATIONSVORRICHTUNG UND VERFAHREN ZUR HERSTELLUNG DER LICHTDIFFUSIONSFOLIE
FEUILLE DE DIFFUSION DE LUMIÈRE, UNITÉ DE RÉTROÉCLAIRAGE, DISPOSITIF D'AFFICHAGE À CRISTAUX LIQUIDES, APPAREIL D'INFORMATION, ET PROCÉDÉ DE FABRICATION DE FEUILLE DE DIFFUSION DE LUMIÈRE

(30) Priority: 01.12.2020 JP 2020199599; 28.09.2021 JP 2021158248
(43) Date of publication of application: 20.09.2023
(73) Proprietor: KEIWA Incorporated, Tokyo 103-0025 (JP)
(72) Inventor: SUKIGARA, Masayuki, Tokyo 103-0025 (JP); FURUTA, Akira, Tokyo 103-0025 (JP); OKABE, Motohiko, Tokyo 103-0025 (JP)
(74) Representative: Lorenz Seidler Gossel Part. mbB
(86) International application number: PCT/JP2021/037062
(87) International publication number: WO 2022/118533

(56) References cited:
- WO-A1-2010/010840
- CN-A- 101 473 248
- JP-A- 2004 538 506
- JP-A- 2007 178 705
- JP-A- 2007 178 875
- JP-A- 2009 048 995
- JP-A- 2010 117 707
- JP-A- 2010 160 437
- JP-A- 2010 160 438
- JP-A- 2011 043 800
- JP-A- 2011 227 231
- JP-A- 2012 047 912
- JP-A- 2013 072 940
- JP-A- 2013 225 058
- US-A1- 2007 188 861
- US-A1- 2009 316 430
- US-A1- 2010 033 957
- US-A1- 2010 315 716

## Description

### TECHNICAL FIELD

The present disclosure relates to a light diffusion sheet, a backlight unit, a liquid crystal display device, an information apparatus, and a method for manufacturing the light diffusion sheet.

### BACKGROUND ART

In recent years, liquid crystal display devices (hereinafter also referred to as liquid crystal displays) have been widely used as display devices for various information apparatuses such as smartphones and tablet terminals). A backlight of a liquid crystal display is mostly a direct type in which light sources are arranged on the back surface of a liquid crystal panel, or an edge light type in which light sources are arranged near a side surface of the liquid crystal panel.

In a case of adopting the direct type backlight, a light diffusion member (a light diffusion plate, a light diffusion sheet, or a light diffusion film) is used to avoid making the light sources themselves such as light emitting diodes (LEDs) traceable through a light-emitting surface and improving uniformity of in-plane luminance.

A direct type backlight disclosed in Patent Document 1 uses a light diffusion plate including a plurality of recesses having an inverted polygon pyramid shape (inverted pyramid shape) or an inverted truncated polygon pyramid shape, in order to improve uniformity of luminance. Patent Document 1 discloses a layered structure of a light diffusion plate and another optical film, and that an inner side surface at an opening edge portion of a recess of the light diffusion plate is formed into a curved surface with a curvature center being on a depth direction side of the recess, in order to prevent the light diffusion plate or the other optical film from being worn and damaged due to vibration during transportation. Further prior art can be found in US 2009/316430 A1, JP 2007 178705 A, JP 2007 178875 A, WO2010/010840 A1, CN 101 473 248 A, and US 2010/033957 A1.

### CITATION LIST

### PATENT DOCUMENT

Patent Document 1: Japanese Unexamined Patent Publication No. 2010-117707

### SUMMARY OF THE INVENTION

### TECHNICAL PROBLEM

However, the direct type backlight disclosed in Patent Document 1 cannot sufficiently reduce damages to the light diffusion plate and other optical films.

Therefore, it is an object of the present disclosure to provide a light diffusion sheet that is hardly damageable even when layered, while improving luminance uniformity.

### SOLUTION TO THE PROBLEM

To achieve the above object, a light diffusion sheet according to claim 1 is disclosed.

The light diffusion sheet of the present disclosure has, at least in its first surface, the plurality of recesses formed in the substantially inverted polygon pyramid or a substantially inverted truncated polygon pyramid. Therefore, the luminance uniformity can be improved. Further, since the ridge parting the recesses (opening edges of the recesses) cause wear and damage, the ridge has a recessed parabolic shape, arc shape, triangular shape or trapezoidal shape between the intersections. This way, wear and damage hardly take place even if the light diffusion sheet is layered with another optical sheet or another light diffusion sheet. Further, the dimension Wr occupied by the curved portion at the top portion of the ridge in the arrangement direction of the recesses is kept at 30% or less of the arrangement pitch of the recesses. This keeps a steep shape of the top portion of the ridge, and therefore, the luminance uniformity hardly drops even when the ridge is recessed between the intersections. Further, the maximum height difference d of 1 µm or more between the straight line connecting the intersections and the ridge can improve the scratch resistance, while the maximum height difference d of 10 µm or less can reduce a drop in the luminance uniformity.

Note that, regarding the light diffusion sheet of the present disclosure, considering difficulties in formation of a recess having a geometrically exact inverted polygon pyramid shape or inverted truncated polygon pyramid shape by an ordinary shape transfer technique, the terms "substantially inverted polygon pyramid" or "substantially inverted truncated polygon pyramid" are used. However, it is needless to say that these terms include shapes that can be regarded as a true or approximately inverted polygon pyramid or inverted truncated polygon pyramid.

While the ridge of the light diffusion sheet of the present disclosure has a recessed shape between its intersections in one preferred embodiment, it is not necessary to form the recessed shape in the ridge between all the intersections. In other words, the ridge between some of the intersections may not have the recessed shape.

Further, in the present disclosure, the "light diffusion sheet" encompasses a plate-like "light diffusion plate" and a film-like "light diffusion film."

Further, in the present disclosure, the "optical sheet" means a sheet having various optical functions such as diffusion, light collection, refraction, reflection, and the like, and the "light diffusion sheet" is an "optical sheet."

In the light diffusion sheet of the present disclosure, the maximum height difference d of 1.5 µm or more and 7 µm or less further improves both the scratch resistance as well as the luminance uniformity. In this regard, the maximum height difference d of 2.5 µm or more and 5 µm or less can yet further improve both the scratch resistance and the luminance uniformity.

In the light diffusion sheet of the present disclosure, the ratio Wr/P of 0.2 or less can further improve the luminance uniformity. In this regard, the ratio Wr/P of 0.1 or less can yet further improve the luminance uniformity.

In the light diffusion sheet of the present disclosure, the luminance uniformity can be improved when the arrangement pitch P of the plurality of recesses is 50 µm or more and 500 µm or less, and when the angles formed between the wall surfaces of the plurality of recesses (that is, inclined surfaces of the substantially inverted polygon pyramid or the substantially inverted truncated polygon pyramid) and the sheet surface of the light diffusion sheet are 40 degrees or more and 65 degrees or less.

In the light diffusion sheet of the present disclosure, the ridge is recessed in a substantially parabolic shape, a substantially arc shape, a substantially triangular shape, or a substantially trapezoidal shape between the intersections. This will improve the scratch resistance.

In the light diffusion sheet of the present disclosure, the plurality of recesses may be formed in a substantially inverted quadrangular pyramid or a substantially inverted truncated quadrangular pyramid shape. In this case, the ridge may extend in a first direction and a second direction. Further, the maximum height difference d may be an average of a maximum height difference dx between the straight line and the ridge in the first direction and a maximum height difference dy between the straight line and the ridge in the second direction. Further, the arrangement pitch p may be an average of an arrangement pitch Px of the plurality of recesses in the first direction and an arrangement pitch Py of the plurality of recesses in the second direction. Further, the dimension Wr may be an average of a dimension Wrx occupied by the curved portion at the top portion of the ridge in the first direction and a dimension Wry occupied by the curved portion at the top portion of the ridge in the second direction. This allows easier manufacturing of a light diffusion sheet excellent in the scratch resistance and luminance uniformity.

In the light diffusion sheet of the present disclosure, the plurality of recesses may be provided only in the first surface, and the second surface may be a matte surface. This further improves the luminance uniformity while reducing wear and damage to the second surface.

A backlight unit of the present disclosure comprises light sources and the above-described light diffusion sheet of the present disclosure.

Since the backlight unit of the present disclosure includes the above-described light diffusion sheet of the present disclosure, the luminance uniformity can be improved and damages can be reduced even when the light diffusion sheet is layered with another optical sheet.

In the backlight unit of the present disclosure, arranging the light sources on a reflective sheet yet further improves the luminance uniformity.

In the backlight unit of the present disclosure, the light diffusion sheet may include a plurality of (e.g., three or more of) light diffusion sheets layered. This further improves the luminance uniformity. If, of the three or more light diffusion sheets, the light diffusion sheet furthest from the light sources contains a diffusion agent, and the other light diffusion sheets contain substantially no diffusion agent, the luminance uniformity is yet further improved.

A liquid crystal display device of the present disclosure includes the above-described backlight unit of the present disclosure and a liquid crystal display panel.

Since the liquid crystal display device of the present disclosure includes the above-described backlight unit of the present disclosure, the luminance uniformity can be improved and damages can be reduced even when the light diffusion sheet is layered with another optical sheet.

An information apparatus of the present disclosure includes the above-described liquid crystal display device of the present disclosure.

Since the information apparatus of the present disclosure includes the above-described liquid crystal display device of the present disclosure, the luminance uniformity can be improved and damages can be reduced even when the light diffusion sheet is layered with another optical sheet.

A method of manufacturing the light diffusion sheet of the present disclosure is a method for manufacturing the above-described light diffusion sheet of the present disclosure, the method including extrusion molding of the light diffusion sheet at the line speed of 10 m/min or more and 30 m/min or less, with the compression line pressure of 100 kgf/cm or more and 500 kgf/cm or less.

The method of manufacturing a light diffusion sheet of the present disclosure allows the dimension Wr occupied by the curved portion at the top portion of the ridge in the arrangement direction of the recesses to be 30% or less of the arrangement pitch of the recesses. This enables manufacturing of the light diffusion sheet with a steep top portion of the ridge and excellent luminance uniformity.

Further, the method of manufacturing a light diffusion sheet of the present disclosure can make the maximum height difference d between the straight line connecting the intersections and the ridge to be 1 µm or more and 10 µm or less. That is, a light diffusion sheet with the ridge recessed between its intersections and the portions of the intersections raised can be obtained. Therefore, even when the light diffusion sheet is layered with another optical sheet, the ridge hardly contacts the other optical sheet and the like between the intersections, which makes wear and damage less likely. Further, since the intersections point-contact the other optical sheet and the like, sliding is caused such that wear and damage are less likely. Thus, a light diffusion sheet excellent in scratch resistance can be manufactured.

Further, the method of manufacturing a light diffusion sheet of the present disclosure may employ extrusion molding, which allows manufacturing of the light diffusion sheet of the present disclosure at low costs.

### ADVANTAGES OF THE INVENTION

According to the present disclosure, there is provided a light diffusion sheet that is hardly damageable even when layered with another optical sheet, while improving the luminance uniformity.

### BRIEF DESCRIPTION OF THE DRAWINGS

FIG. 1 is a cross-sectional view of a liquid crystal display device of an embodiment.
FIG. 2 is a cross-sectional view of a backlight unit of the embodiment.
FIG. 3 is a plan view showing an exemplary arrangement of light sources in the backlight unit shown in FIG. 2.
FIG. 4 is a perspective view of a light diffusion sheet of the embodiment.
FIG. 5 is an enlarged perspective view showing recesses formed in the light diffusion sheet of the embodiment.
FIG. 6 is a schematic view showing an exemplary shape of an X-directional ridge parting the recesses in the light diffusion sheet according to the embodiment.
FIG. 7 is a schematic view showing an exemplary shape of a Y-directional ridge parting the recesses in the light diffusion sheet of the embodiment.
FIG. 8 is a schematic view showing a variation in the shape of the ridge parting the recesses in the light diffusion sheet of the embodiment.
FIG. 9 is a schematic view showing an exemplary cross-sectional configuration of the light diffusion sheet of the embodiment, cut out along a surface perpendicular to the sheet and covering the centers of recesses adjacent to each other in the X-direction and an intermediate point of the ridge between the recesses.
FIG. 10 is a schematic view showing an exemplary cross-sectional configuration of the light diffusion sheet of the embodiment, cut out along a surface perpendicular to the sheet and covering the centers of recesses adjacent to each other in the Y-direction and an intermediate point of the ridge between the recesses.
FIG. 11 is a view showing an exemplary result obtained by measuring a shape and a dimension of the X-directional ridge shown in FIG. 6 with a laser microscope.
FIG. 12 is a view showing an exemplary result obtained by measuring a shape and a dimension of the Y-directional ridge shown in FIG. 7 with a laser microscope.
FIG. 13 is a view showing an exemplary result obtained by measuring a shape and a dimension of the cross-sectional configuration shown in FIG. 9 with a laser microscope.
FIG. 14 is a view showing an exemplary result obtained by measuring a shape and a dimension of the cross-sectional configuration shown in FIG. 10 with a laser microscope.
FIG. 15 is a configuration diagram of an apparatus for measuring scratch resistance of light diffusion sheets of Examples.
FIG. 16 is a view showing the shape of a square pyramid on a roll used for manufacturing the light diffusion sheets of Examples.
FIG. 17 is a view showing the shape of a square pyramid on a flat plate used for manufacturing the light diffusion sheets of Comparative Examples.
FIG. 18 is a view showing a result of scratch resistance test performed on each sample of Examples and Comparative Examples.
FIG. 19 is a cross-sectional view of a backlight unit of a modification.

### DESCRIPTION OF EMBODIMENT

### (Embodiment)

Embodiments of the present disclosure will be described below with reference to the drawings. Note that the scope of the present disclosure is defined by the claims.

### <Liquid Crystal Display Device>

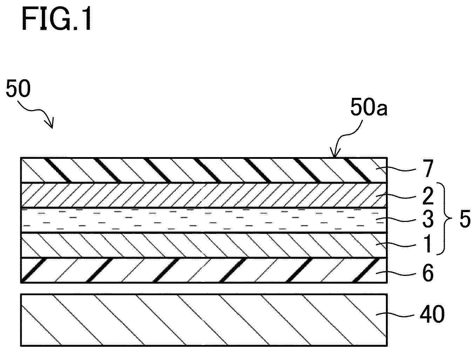

As shown in FIG. 1, a liquid crystal display device 50 of the present embodiment includes a liquid crystal display panel 5, a first polarizing plate 6 attached to a lower surface of the liquid crystal display panel 5, a second polarizing plate 7 attached to an upper surface of the liquid crystal display panel 5, and a backlight unit 40 provided on a back surface side of the liquid crystal display panel 5 with the first polarizing plate 6 interposed. The liquid crystal display panel 5 includes a TFT substrate 1 and a CF substrate 2 provided so as to face each other, a liquid crystal layer 3 provided between the TFT substrate 1 and the CF substrate 2, and a sealing (not shown) provided in a frame shape to seal the liquid crystal layer 3 between the TFT substrate 1 and the CF substrate 2.

The shape of a display screen 50a of the liquid crystal display device 50 viewed from the front (the top in Figure 1) is basically a rectangle or a square; however, the shape may be any shape, such as a rectangle with rounded corners, an oval, a circle, a trapezoid, or the shape of an instrument panel of an automobile.

The liquid crystal display device 50 displays an image by applying a voltage of a predetermined magnitude to the liquid crystal layer 3 in the sub-pixels corresponding to pixel electrodes, to change the alignment state of the liquid crystal layer 3 to adjust the transmission of light entering from the backlight unit 40 through the first polarizing plate 6such that this light is emitted through the second polarizing plate 7.

The liquid crystal display device 50 of the present embodiment is used as a display device incorporated in various information apparatuses (e.g., an in-vehicle device such as a car navigation system, a personal computer, a mobile phone, a portable information terminal, a portable game machine, a copying machine, a ticket vending machine, an automated teller machine, and the like).

The TFT substrate 1 includes, for example, a plurality of TFTs arranged in a matrix on a glass substrate, an interlayer insulating film arranged in such a manner as to cover the TFTs, a plurality of pixel electrodes arranged in a matrix on the interlayer insulating film and connected to the TFTs, respectively, and an alignment film arranged in such a manner as to cover the pixel electrodes. The CF substrate 2 includes, for example, a black matrix arranged in a lattice manner on a glass substrate, a color filter including a red layer, a green layer, and a blue layer arranged in each lattice of the black matrix, a common electrode arranged in such a manner as to cover the black matrix and the color filter, and an alignment film arranged in such a manner as to cover the common electrode. The liquid crystal layer 3 is made of, for example, a nematic liquid crystal material containing liquid crystal molecules having electro-optical characteristics. The first polarizing plate 6 and the second polarizing plate 7 each includes, for example, a polarizer layer having a polarization axis in one direction, and a pair of protective layers arranged in such a manner as to sandwich the polarizer layer.

### <Backlight Unit>

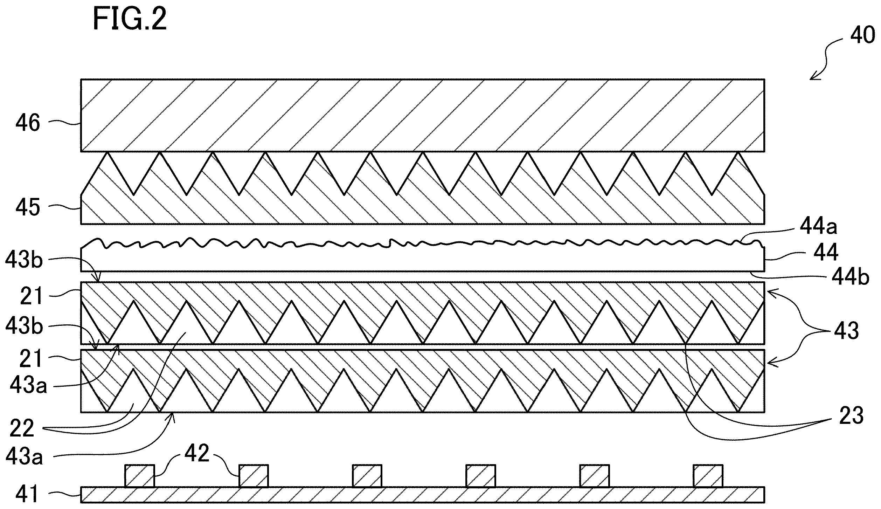

As shown in FIG. 2, the backlight unit 40 of the present embodiment includes a reflective sheet 41, a plurality of small light sources 42 two-dimensionally arranged on the reflective sheet 41, a multilayer of first light diffusion sheets 43 arranged above the plurality of small light sources 42, a second light diffusion sheet 44 arranged above the multilayer of the first light diffusion sheets 43, and a first prism sheet 45 and a second prism sheet 46 sequentially arranged above the second light diffusion sheet 44. In this example, the multilayer of the first light diffusion sheets 43 are formed by stacking two first light diffusion sheets 43 having the same structure. Although not shown, a polarizing sheet may be provided on the upper side of the second prism sheet 46.

The reflective sheet 41 is formed of, for example, a white polyethylene terephthalate resin film, a silver-deposited film, or the like.

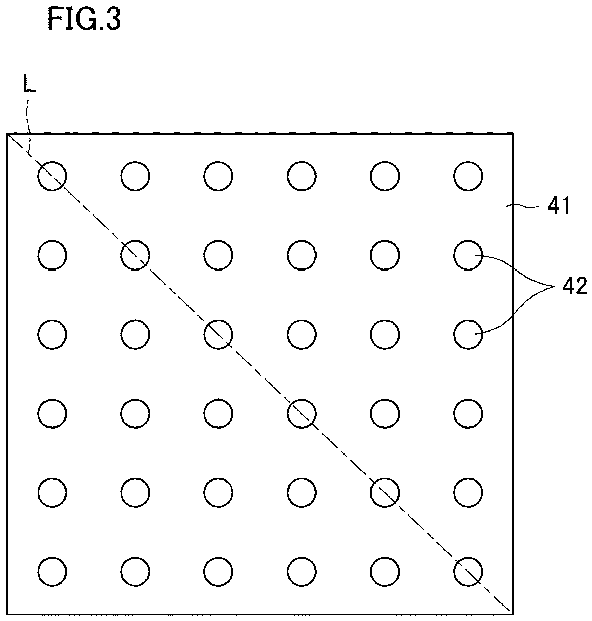

The type of the small light sources 42 is not limited. For example, an LED element, a laser element, or the like may be adopted, and an LED element may be adopted for the sake of costs, productivity, and the like. Further, to adjust a light emission angle of each LED element to serve as the small light source 42, a lens may be attached to the LED element. For example, as shown in FIG. 3, a plurality of small light sources 42 including LED elements each having a size of several mm squares may be arranged on the reflective sheet 41 in a two dimensional array at regular intervals. Each of the small light sources 42 may have a rectangular shape in a plan view, where each side may be 10 µm or more (preferably 50 µm or more) and 20 mm or less (preferably 10 mm or less, more preferably 5 mm or less).

Further, the number of the small light sources 42 is not limited. However, to be distributed, the plurality of small light sources 42 may be arranged regularly on the reflective sheet 41 in one preferred embodiment. The "arranged regularly" means arrangement with a certain regularity. Examples include the case where the small light sources 42 are arranged at equal intervals. If the small light sources 42 are arranged at equal intervals, the distance between the centers of two adjacent small light sources 42 may be 0.5 mm or more (2 mm or more in one preferred embodiment) and 20 mm or less.

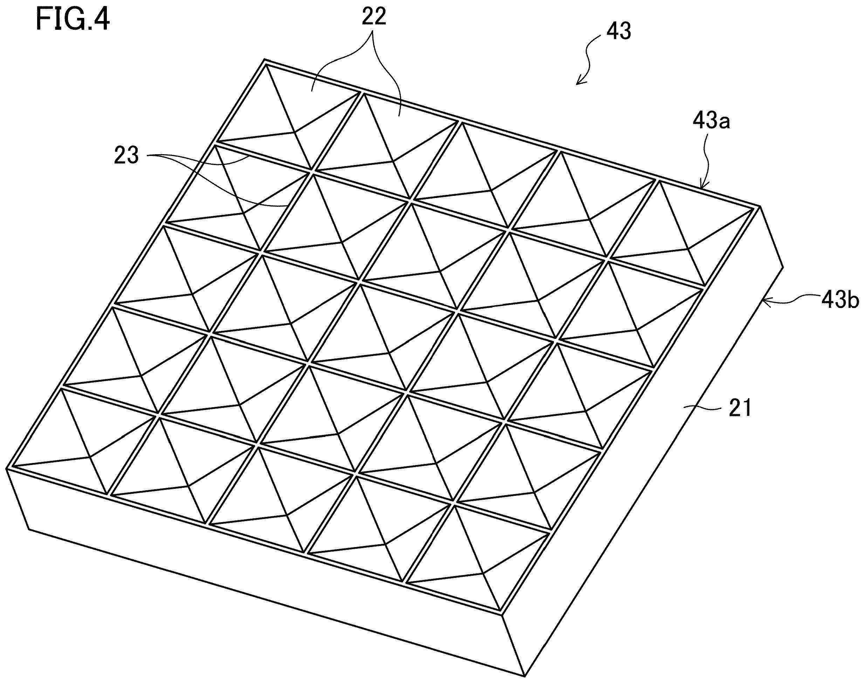

Each first light diffusion sheet 43 includes a base material layer 21. A plurality of recesses 22 are provided on a first surface (a surface facing the small light sources 42) 43a of the first light diffusion sheet 43. The plurality of recesses 22 are formed in a substantially inverted polygon pyramid shape or a substantially inverted truncated polygon pyramid shape. In the present example, the plurality of recesses 22 are formed in a substantially inverted square pyramid shape. The recesses 22 adjacent to each other are parted by a ridge 23. The arrangement pitch of the array of recesses 22 is, for example, about 50 µm or more and about 500 µm or less. The angle formed by a wall surface of the recess 22 (an inclined surface of the substantially inverted polygon pyramid or the substantially inverted truncated polygon pyramid) and the sheet surface of the first light diffusion sheet 43 (an imaginary mirror surface without the recess 22) is, for example, 40 degrees or more and 65 degrees or less. In other words, the top angle of the recess 22 is, for example, 50 degrees or more and 100 degrees or less. A second surface 43b of the first light diffusion sheet 43 may be a mirror surface, but is a matte surface in order to improve the diffusivity in one preferred embodiment. FIG. 4 shows a state in which the recesses 22 each formed in a substantially inverted square pyramid shape are arranged in a 5 × 5 matrix on the first surface 43a of the first light diffusion sheet 43.

The base material layer 21 is made of, for example, polycarbonate as a base material (matrix resin), and contains no diffusion agent in one preferred embodiment; however, for example, about 0.1 to 4% by mass of a diffusion agent may be contained for 100% by mass of the base material. The diffusion agent may be a suitable known material. While this example deals with a case where the first light diffusion sheet 43 has a single-layer structure of the base material layer 21, the first light diffusion sheet 43 may, instead, have a structure of two or more layers including a layer with the recesses 22 formed.

The second light diffusion sheet 44 may have a matte surface on its first surface (the surface facing the first prism sheet 45) 44a and a mirror surface or recesses formed in a substantially inverted square pyramid on its second surface 44b. The second light diffusion sheet 44 is made of, for example, polycarbonate as a base material (matrix resin), and contains a diffusion agent in one preferred embodiment. For example, about 0.5 to 4% by mass of a diffusion agent may be contained for 100% by mass of the base material. The second light diffusion sheet 44 is made by, for example, mixing 1 part by mass of silicone composite powder (average particle diameter of 2.0µm) as a diffusion agent for 99 parts by mass of aromatic polycarbonate resin.

The first prism sheet 45 and the second prism sheet 46 are each, for example, a film having thereon a plurality of grooves each having an isosceles triangular transversal cross-section. The top angle of a prism between a pair of grooves adjacent to each other is approximately 90 degrees. The grooves formed on the first prism sheet 45 and the grooves formed on the second prism sheet 46 are arranged so that each groove on the first prism sheet 45 and each groove on the second prism sheet 46 are perpendicular to each other. The first prism sheet 45 and the second prism sheet 46 may be formed as one piece. The first prism sheet 45 and the second prism sheet 46 may be, for example, made of polyethylene terephthalate (PET) film with a prism shape formed by using UV-curable acrylic resin.

Although not shown, in a case of providing a polarizing sheet on the upper side of the second prism sheet 46, the polarizing sheet may be, for example, DBEF series manufactured by 3M. The polarizing sheet improves the luminance of the display screen 50a by keeping light emitted from the backlight unit 40 from being absorbed into the first polarizing plate 6 of the liquid crystal display device 50.

### <Detailed Configuration of Light Diffusion Sheet>

In the example shown in FIG. 2, a plurality of recesses 22 are formed in the first surface (the surface facing the small light sources 42) 43a of the first light diffusion sheet 43; however, instead, or in addition to this, a plurality of other recesses similar to the recesses 22 may be formed in the second surface 43b of the first light diffusion sheet 43.

The plurality of recesses 22 are formed in a substantially inverted polygon pyramid shape or a substantially inverted truncated polygon pyramid shape. The plurality of recesses 22 may be regularly two-dimensionally arranged. The "inverted (truncated) polygon pyramids" are (truncated) triangular pyramids, (truncated) quadrangular pyramids, or (truncated) hexagonal pyramids, which can be two-dimensionally arranged without a space therebetween in the surface in one preferred embodiment. The surfaces of the recesses 22 are formed by a manufacturing process such as extrusion molding or injection molding using a die (e.g., metal rolls). In view of the accuracy in cutting the surface of the die (or each metal roll), the "inverted (truncated) polygon pyramids" may be inverted (truncated) quadrangular pyramids.

Note that, considering difficulty in formation of a recess having a geometrically exact inverted polygon pyramid shape or inverted truncated polygon pyramid shape by an ordinary shape transfer technique, the terms "substantially inverted polygon pyramid" or "substantially inverted truncated polygon pyramid" are used. However, it is needless to say that these terms include shapes that can be regarded as a true or approximately inverted polygon pyramid or inverted truncated polygon pyramid. Here, "substantial(ly)" XX means that shapes can be approximated to the XX. For example, "substantially quadrangular pyramids" means shapes can be approximated to the quadrangular pyramids. Further, inevitable variations in the shape of the "inverted polygon pyramid" or the "inverted truncated polygon pyramid" attributed to processing accuracy of industrial production are also encompassed by the "substantially inverted polygon pyramid" or the "substantially inverted truncated polygon pyramid."

If a plurality of recesses 22 are regularly two-dimensionally arranged, the plurality of recesses 22 may be arranged without a space therebetween on the entire surface of the first light diffusion sheet 43. Alternatively, the recesses 22 may be arranged at regular intervals (i.e., a constant pitch).

The first light diffusion sheet 43 may be a base material layer 21 containing not diffusion agent and may be, for example, a base material layer 21 made of a clear polycarbonate. When the base material layer 21 contains a diffusion agent, the diffusion agent is not limited; however, examples of the diffusion agent may include silica, titanium oxide, aluminum hydroxide, and barium sulfate as inorganic particles, as well as acrylic, acrylonitrile, silicone, polystyrene, and polyamide as organic particles. The particle size of the diffusion agent may be, for example, 0.1 µm or more (preferably 1 µm or more ) and 10 µm or less (preferably 8 µm or less) in view of the light diffusing effect. Although the first light diffusion sheet 43 contains no diffusion agent in one preferred embodiment, the concentration of the diffusion agent may be, for example, 0.1% or more (preferably 0.3% or more) by mass and 10% or less (preferably 8% or less) by mass for 100% by mass of the material (i.e., the matrix) of the base material layer 21, in view of reflection and refraction effects by the substantially inverted polygon pyramid shape and the light diffusing effect by the diffusion agent. The difference in refractive index between the diffusion agent and the matrix of the base material layer 21 may be 0.01 or more, preferably 0.03 or more, more preferably 0.05 or more, further more preferably 0.1 or more, and most preferably 0.15 or more. A difference of less than 0.01 between the refractive index of the diffusion agent and that of the matrix of the base material layer 21 causes insufficient diffusion effects of the light diffusion agent.

The resin to serve as the matrix of the base material layer 21 is not limited, as long as being a material that transmits light. Examples may include acrylic, polystyrene, polycarbonate, methyl methacrylate-styrene copolymer resin (MS resin), polyethylene terephthalate, polyethylene naphthalate, cellulose acetate, and polyimide.

The thickness of the first light diffusion sheet 43 is not limited, but may be, for example, 0.1 mm or more and 3 mm or less (preferably 2 mm or less, more preferably 1.5 mm or less, and further more preferably 1 mm or less). The first light diffusion sheet 43 with a thickness larger than 3 mm makes it difficult to achieve a reduction in the thickness of the liquid crystal display. On the other hand, the first light diffusion sheet 43 with a thickness smaller than 0.1 mm makes it difficult to achieve the effect of improving the luminance uniformity.

If the first light diffusion sheet 43 has a multilayer structure (e.g., the base material layer as the first layer and a recess-formed layer as the second layer), the recess-formed layer has a thickness that is greater than a maximum depth of the recesses 22. For example, the thickness of the layer having the recesses with the depth of 20 µm is larger than 20µm. The first light diffusion sheet 43 may include three-layers or more including the base material layer and the recess-formed layer. Alternatively, the base material layer and the recess-formed layer each serving as an independent sheet may be layered or separately arranged.

### <Method of Manufacturing Light Diffusion Sheet>

A method of manufacturing the first light diffusion sheet 43 will be described below. The method of manufacturing the first light diffusion sheet 43 is not limited. For example, extrusion molding or injection molding may be employed. When the first light diffusion sheet 43 is extrusion-molded, a line speed may be set to, for example, 10 m/min or more and 30 m/min or less, and the compression line pressure may be set to, for example, 100 kgf/cm or more and 500 kgf/cm or less.

The procedure for producing a single-layer light diffusion sheet having unevenness on its surface by extrusion molding is as follows. First, plastic particles as pellets added with a diffusion agent are introduced into a single-screw extruder. The plastic particles may also include those not added with any diffusion agent. Then, the plastic particles are heated, molten, and kneaded. After that, the molten resin extruded from a T-die is sandwiched and cooled between two metal rolls and transported by using guide rolls, and then cut off into sheet plates by a sheet cutter machine to produce diffusion sheets. Here, the molten resin is sandwiched using the metal roll having a surface with an inverted shape of desired unevenness, which will be transferred onto the resin. This allows for shaping of diffusion sheets to have surfaces with the desired unevenness. However, the surface shapes of the rolls are not 100% transferred onto the resin and may thus be counted backwards from the degree of transfer to be designed.

If a two-layered light diffusion sheet with an uneven surface may be manufactured by extrusion molding, for example, plastic particles as pellets necessary for forming each layer are introduced into each of two single-screw extruders, the procedure above is then performed for each layer. Then, the fabricated sheets are layered.

Alternatively, the two-layered light diffusion sheet with an uneven surface may be manufactured as follows. First, plastic particles as pellets necessary for forming each layer are introduced into each of two single-screw extruders, molten by heating, and kneaded. Then, molten resin to become each layer is introduced into a single T-die, where layers of multiple molten resins are stacked, and the layers of the molten resins extruded through the T-die are then sandwiched and cooled between two metal rolls. After that, the layers of molten resin are transported by guide rolls and cut off into sheet plates using a sheet cutter machine, thereby yielding a double-layer diffusion sheet with an uneven surface.

Alternatively, the light diffusion sheet may be produced by shape-transfer using ultraviolet (UV) as follows. First, an uncured UV-curing resin is filled in a roll having an inverted shape of an uneven surface to be transferred, and a base material is pressed against the resin. Next, with the roll filled with UV-curing resin and the base material in one piece, the resin is cured by UV irradiation. Next, the sheet to which the shape of the uneven surface has been transferred by using the resin is released from the roll. Finally, the sheet is again irradiated with ultraviolet rays so that the resin is completely cured, thereby producing a diffusion sheet having an uneven surface.

### <Features of Light Diffusion Sheet>

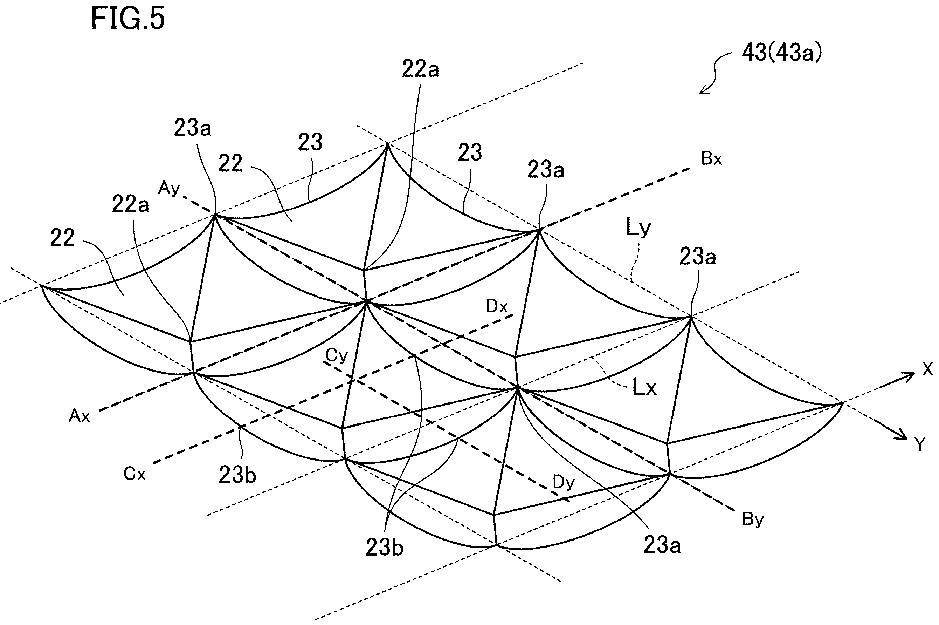

Features of the first light diffusion sheet 43 of the present embodiment will be described below with reference to FIG. 5 to FIG. 10.

As shown in FIG. 5, the first surface 43a of the first light diffusion sheet 43 has the plurality of recesses 22 each formed in, for example, a substantially inverted square pyramid. Each of the plurality of recesses 22 may be formed in a substantially inverted truncated square pyramid. A center 22a of each recess 22 is a deepest portion of the recess 22. The plurality of recesses 22 are arranged along the X-direction (first direction) and the Y-direction (second direction) perpendicular to each other. The recesses 22 adjacent to each other are parted by a ridge 23. The ridge 23 extends in the X-direction and the Y-direction.

One of features of the first light diffusion sheet 43 is that the ridge 23 has a recessed shape between intersections 23a of the ridge 23 with respect to straight lines Lx, Ly connecting the intersections 23a. Maximum height differences between the straight lines Lx, Ly connecting the intersections 23a and the ridge 23 need to be 1 µm or more and 10 µm or less, and are 1.5 µm or more and 7 µm or less in one preferred embodiment, and are 2.5 µm or more and 5 µm or less in a more preferred embodiment.

While the ridge of the first light diffusion sheet 43 has a recessed shape between its intersections 23a in one preferred embodiment, it is not necessary to form the recessed shape in the ridge 23 between all the intersections 23a. In other words, the ridge 23 between some of the intersections 23a may not have the recessed shape.

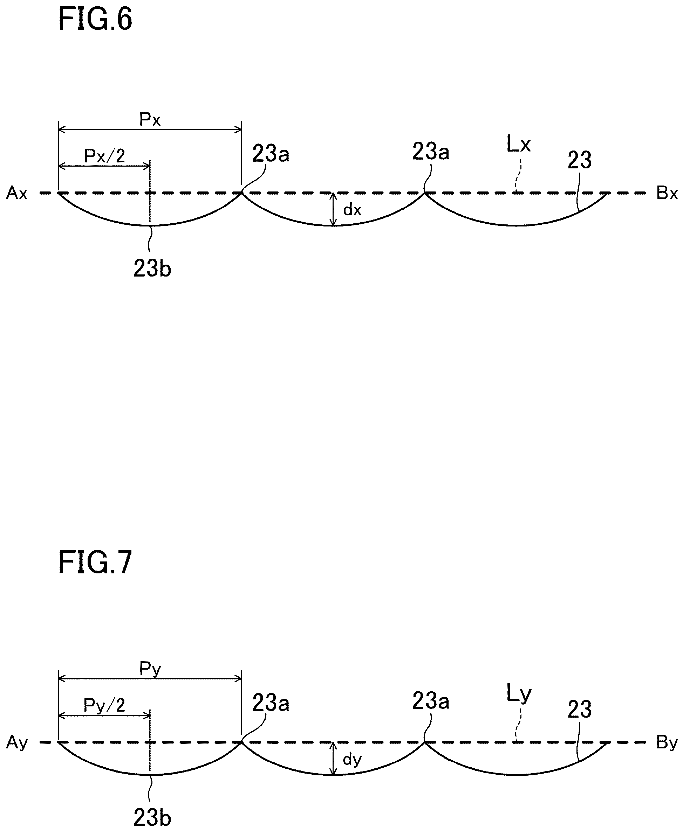

FIG. 6 shows an exemplary shape of a ridge 23 extending in the X-direction along the line Ax-Bx in FIG. 5, as viewed from a direction parallel to the sheet surface and perpendicular to the X-direction. FIG. 7 shows an exemplary shape of a ridge 23 extending in the Y-direction along the line Ay-By in FIG. 5, as viewed from a direction parallel to the sheet surface and perpendicular to the Y-direction. As shown in FIG. 6, the ridge 23 has a recessed shape between the intersections 23a, with respect to the straight line Lx connecting the intersections 23a of the ridge 23 in the X-direction. Where an arrangement pitch of the recesses 22 in the X-direction is Px, the ridge 23 extending in the X-direction has a lowest point 23b in, for example, a Px/2 (a half pitch) position from the intersections 23a, and the distance (maximum height difference) from the straight line Lx to the lowest point 23b is dx. Further, as shown in FIG. 7, the ridge 23 has a recessed shape between the intersections 23a, with respect to the straight line Ly connecting the intersections 23a of the ridge 23 in the Y-direction. Where an arrangement pitch of the recesses 22 in the Y-direction is Py, the ridge 23 extending in the Y-direction has a lowest point 23b in, for example, a Py/2 (a half pitch) position from the intersections 23a, and the distance (maximum height difference) from the straight line Ly to the lowest point 23b is dy.

Note that, when the recess 22 is formed in an inverted square pyramid, the arrangement pitch Px of the recesses 22 in the X-direction equals the interval (horizontal distance) between the intersections 23a in the X-direction, and the arrangement pitch Py of the recesses 22 in the Y-direction equals the interval (horizontal distance) between the intersections 23a in the Y-direction.

Further, where the maximum height difference d is an average of the maximum height difference dx in the X-direction and the maximum height difference dy in the Y-direction, the maximum height difference d needs to be 1 µm or more and 10 µm or less, and may be 1.5 µm or more and 7 µm or less in one preferred embodiment, and may be 2.5 µm or more and 5 µm or less in a more preferred embodiment.

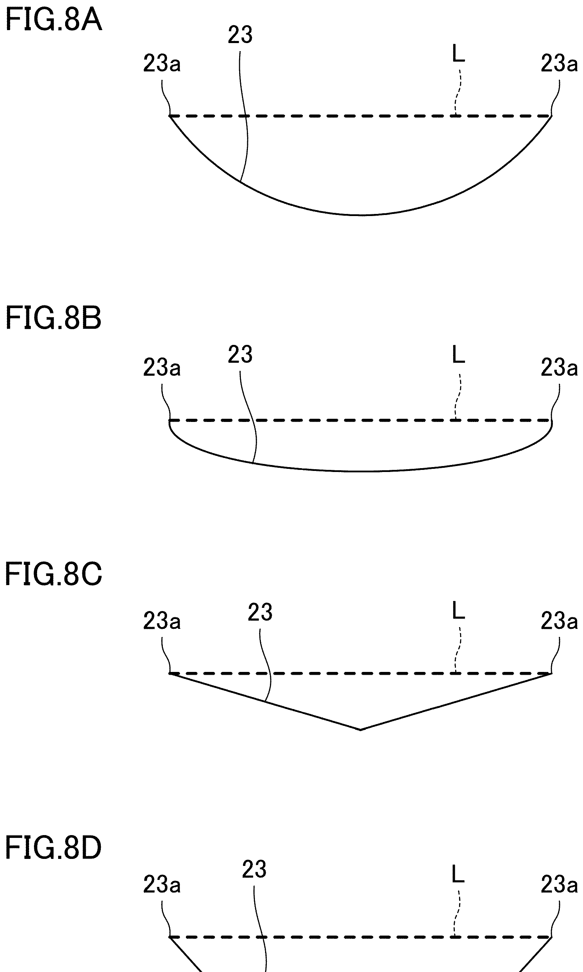

Further, the recessed shape of the ridge 23 between intersections 23a is not limited. For example, as shown in FIG. 8, the ridge 23 between the intersections 23a may be recessed in a substantially arc shape ((A) of FIG. 8), a substantially parabola shape ((B) of FIG. 8), a substantially triangular shape ((C) of FIG. 8), or a substantially trapezoidal shape ((D) of FIG. 8) with respect to the straight line L connecting the intersections 23a.

Another feature of the first light diffusion sheet 43 is that, where P is the arrangement pitch of the recesses 22 and Wr is the dimension occupied by a curved portion at the top portion of the ridge 23 in the arrangement direction of the recesses 22, a ratio Wr/P needs to be 0.3 or less, and is 0.2 or less in one preferred embodiment, and is 0.1 or less in a more preferred embodiment.

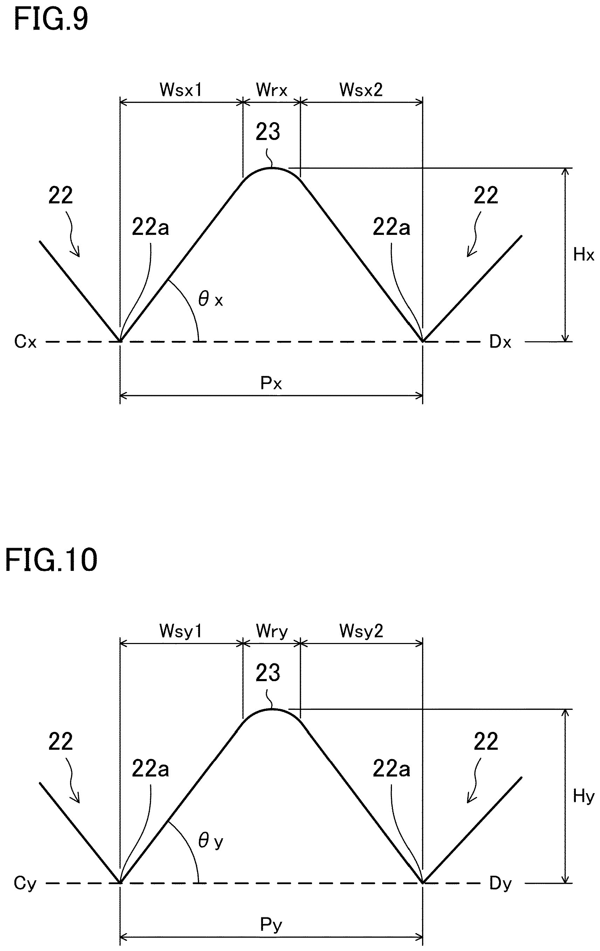

FIG. 9 shows an exemplary cross-sectional configuration of the first light diffusion sheet 43, taken along the line Cx-Dx of FIG. 5. FIG. 10 shows an exemplary cross-sectional configuration of the first light diffusion sheet 43, taken along the line Cy-Dy of FIG. 5. Specifically, FIG. 9 shows an exemplary cross-sectional configuration of the first light diffusion sheet 43, cut out along a surface perpendicular to the sheet surface and covering the centers 22a of recesses 22 adjacent to each other in the X-direction and an intermediate point between intersections 23a of the ridge 23 between the recesses 22. FIG. 10 shows an exemplary cross-sectional configuration of the first light diffusion sheet 43, cut out along a surface perpendicular to the sheet surface and covering the centers 22a of recesses 22 adjacent to each other in the Y-direction and an intermediate point between intersections 23a of the ridge 23 between the recesses 22.

In the cross-sectional configuration shown in FIG. 9, the interval (horizontal distance) of the centers 22a of the recesses 22 adjacent to each other in the X-direction equals the arrangement pitch Px of the recesses 22 in the X-direction. The dimension occupied by the curved portion at the top portion of the ridge 23 in the X-direction is Wrx. The dimensions occupied by the straight line portions of the wall surfaces (inclined surfaces of the inverted quadrangular pyramid) of the recesses 22 adjacent to each other and sandwiching the ridge 23 in the X-direction are Wsx1 and Wsx2. An angle formed by each wall surface (inclined surface of each inverted quadrangular pyramid) of the recess 22 with the sheet surface in the X-direction is θx. The height from the center 22a of the recess 22 to the top point (the intermediate point between the intersections 23a) of the ridge 23 (the ridge 23 extending in the Y-direction) is Hx.

In the cross-sectional configuration shown in FIG. 10, the interval (horizontal distance) of the centers 22a of the recesses 22 adjacent to each other in the Y-direction equals the arrangement pitch Py of the recesses 22 in the Y-direction. The dimension occupied by the curved portion at the top portion of the ridge 23 in the Y-direction is Wry. The dimensions occupied by the straight line portions of the wall surfaces (inclined surfaces of the inverted quadrangular pyramid) of the recesses 22 adjacent to each other and sandwiching the ridge 23 in the Y-direction are Wsy1 and Wsy2. An angle formed by each wall surface (inclined surface of each inverted quadrangular pyramid) of the recess 22 with the sheet surface in the Y-direction is θy. The height from the center 22a of the recess 22 to the top point (the intermediate point between the intersections 23a) of the ridge 23 (the ridge 23 extending in the X-direction) is Hy.

Note that, in a case where the recess 22 is formed in an inverted quadrangular pyramid, where P is an average of the arrangement pitch Px and the arrangement pitch Py, and where Wr is an average of the dimension Wrx and the dimension Wry, the ratio Wr/P needs to be set to 0.3 or less, and is set to 0.2 or less in one preferred embodiment, and is set to 0.1 or less in a more preferred embodiment.

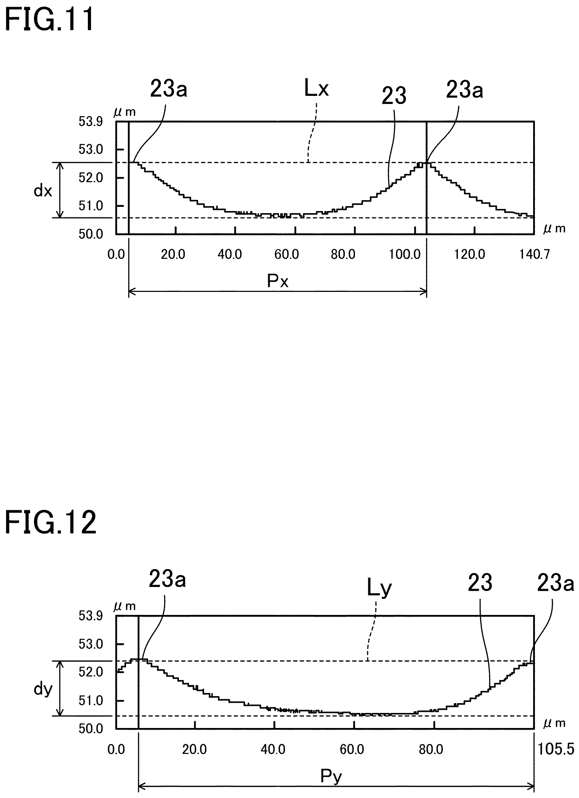

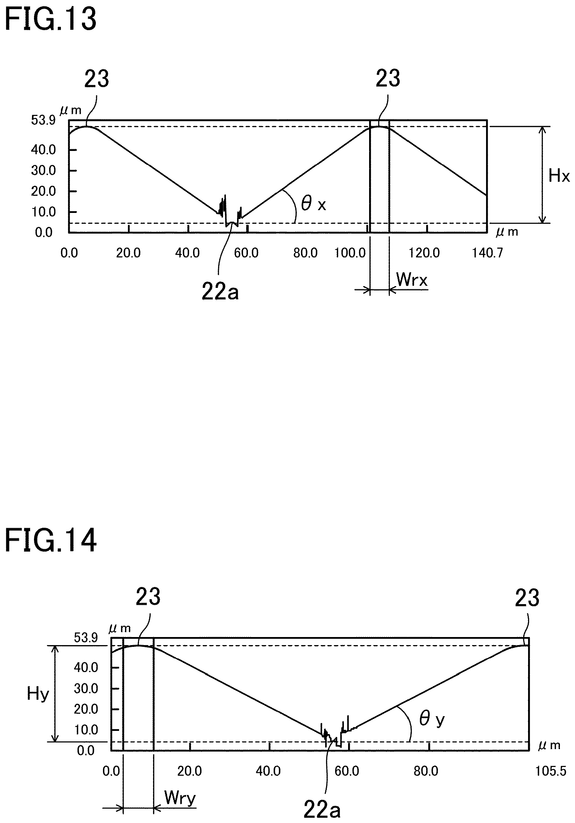

FIG. 11 shows an exemplary result of measurement of the shape and the dimension of the X-directional ridge shown in FIG. 6, by using a laser microscope. FIG. 12 shows an exemplary result of measurement of the shape and the dimension of the Y-directional ridge shown in FIG. 7, by using the laser microscope. FIG. 13 shows an exemplary result of measurement of the shape, the dimension, and the angle of the cross-sectional configuration shown in FIG. 9, by using the laser microscope. FIG. 14 shows an exemplary result of measurement of the shape, the dimension, and the angle of the cross-sectional configuration shown in FIG. 10, by using the laser microscope.

Note that, in FIG. 11 and FIG. 12, in the measurement of the maximum values of the distances (maximum height differences) dx, dy between the ridge 23 and the straight lines Lx, Ly connecting the intersections 23a of the ridge 23, maximum values of vertical lines drawn from points on the ridge 23 to the straight lines Lx, Ly were obtained as dx, dy, respectively.

Further, in the measurement of the arrangement pitches Px, Py, the X-directional and Y-directional "horizontal distances between intersections 23a" were obtained as Px, Py, respectively. The arrangement pitches Px, Py can be easily and accurately obtained also by this measurement of the "horizontal distances of the intersections 23a."

### <Advantages of Embodiment>

As described hereinabove, the first light diffusion sheet 43 of the present embodiment has, at least in its first surface 43a, the plurality of recesses 22 formed in a substantially inverted polygon pyramid or a substantially inverted truncated polygon pyramid. The ridge 23 parting the plurality of recesses 22 has a recessed shape between the intersections 23a, with respect to a straight line connecting the intersections 23a of the ridge 23. Where P is the arrangement pitch of the plurality of recesses 22 and Wr is the dimension occupied by a curved portion at the top portion of the ridge 23 in the arrangement direction of the plurality of recesses 22, a ratio Wr/P is 0.3 or less. The maximum height difference d between the ridge 23 and the line connecting the intersections 23a of the ridge 23 is 1 µm or more and 10 µm or less.

According to the present embodiment, the first light diffusion sheet 43 has, at least in its first surface 43a, the plurality of recesses 22 formed in a substantially inverted polygon pyramid or a substantially inverted truncated polygon pyramid. Therefore, the luminance uniformity can be improved. Further, since the ridge 23 parting the recesses 22 (opening edges of the recesses 22) causes wear and damage, the ridge 23 has a recessed shape between the intersections 23a of the ridge 23. This way, wear and damage hardly take place even if the first light diffusion sheet 43 is layered with another optical sheet or another light diffusion sheet. Further, the dimension Wr occupied by the curved portion at the top portion of the ridge 23 in the arrangement direction of the recesses 22 is kept at 30% or less of the arrangement pitch P of the recesses. This keeps a steep shape of the top portion of the ridge 23, and therefore, the luminance uniformity hardly drops even when the ridge 23 is recessed between the intersections 23a of the ridge 23. Further, the maximum height difference d of 1 µm or more between the straight line connecting the intersections 23a and the ridge 23 can improve the scratch resistance, while the maximum height difference d of 10 µm or less can reduce a drop in the luminance uniformity.

In the first light diffusion sheet 43 of the present embodiment, the maximum height difference d of 1.5 µm or more and 7 µm or less between the straight line connecting the intersections 23a and the ridge 23 can further improve both the scratch resistance as well as the luminance uniformity. In this regard, the maximum height difference d of 2.5 µm or more and 5 µm or less can yet further improve both the scratch resistance and the luminance uniformity.

In the first light diffusion sheet 43 of the present embodiment, the luminance uniformity can be further improved with the ratio Wr/P of 0.2 or less, where P is the arrangement pitch of the plurality of recesses 22 and Wr is the dimension occupied by a curved portion at the top portion of the ridge 23 in the arrangement direction of the plurality of recesses 22. In this regard, the ratio Wr/P of 0.1 or less can yet further improve the luminance uniformity.

In the first light diffusion sheet 43 of the present embodiment, the luminance uniformity can be improved when the arrangement pitch P of the plurality of recesses 22 is 50 µm or more and 500 µm or less, and when the angles formed between the wall surfaces of the plurality of recesses 22 (that is, inclined surfaces of the substantially inverted polygon pyramid or the substantially inverted truncated polygon pyramid) and the sheet surface are 40 degrees or more and 65 degrees or less.

In the first light diffusion sheet 43 of the present embodiment, the ridge 23 recessed in a substantially parabolic shape, a substantially arc shape, a substantially triangular shape, or a substantially trapezoidal shape between the intersections 23a can improve the scratch resistance.

In the first light diffusion sheet 43 of the present embodiment, the plurality of recesses 22 are formed in a substantially inverted quadrangular pyramid or a substantially inverted truncated quadrangular pyramid shape. In this case, the ridge 23 may extend in the X-direction (first direction) and the Y-direction (second direction). The maximum height difference d between the straight line connecting the intersections 23a and the ridge 23 may be an average value of the maximum height difference dx between the straight line and the ridge 23 in the X-direction and the maximum height difference dy between the straight line and the ridge 23 in the Y-direction. The arrangement pitch P of the plurality of the recesses 22 may be an average value of the arrangement pitch Px of the recesses 22 in the X-direction and the arrangement pitch Py of the recesses 22 in the Y-direction. Further, the dimension Wr occupied by the curved portion at the top portion of the ridge 23 in the arrangement direction of the recesses 22 may be an average of the dimension Wrx occupied by the curved portion at the top portion of the ridge 23 in the X-direction and the dimension Wry occupied by the curved portion at the top portion of the ridge 23 in the Y-direction. This allows easier manufacturing of a light diffusion sheet excellent in the scratch resistance and luminance uniformity.

In the first light diffusion sheet 43 of the present embodiment, the plurality of recesses 22 are provided only in the first surface 43a, and the second surface 43b is a matte surface. This further improves the luminance uniformity while reducing wear and damage to the second surface 43b.

A backlight unit 40 of the present embodiment is a backlight unit 40 built in a liquid crystal display device 50, which leads light emitted from light sources 42 toward a display screen 50a, including the above-described first light diffusion sheet 43 of the present embodiment between the display screen 50a and the light sources 42.

Since the backlight unit 40 of the present embodiment includes the first light diffusion sheet 43 of the present embodiment, the luminance uniformity can be improved and damages can be reduced even when the first light diffusion sheet 43 is layered with another first light diffusion sheet 43 or with another optical sheet.

In the backlight unit 40 of the present embodiment, arranging the light sources 42 on a reflective sheet 41 provided on an opposite side of the display screen 50a as seen from the first light diffusion sheet 43 yet further improves the luminance uniformity.

A liquid crystal display device 50 of the present embodiment includes the backlight unit 40 of the present embodiment and a liquid crystal display panel 5.

Since the liquid crystal display device 50 and an information apparatus including the liquid crystal display device 50 of the present embodiment include the backlight unit 40 of the present embodiment, the luminance uniformity can be improved and damages can be reduced even when the first light diffusion sheet 43 is layered with another first light diffusion sheet 43 or with another optical sheet.

A method of manufacturing the light diffusion sheet of the present embodiment is a method of manufacturing the first light diffusion sheet 43 of the present embodiment, in which the first light diffusion sheet 43 is extrusion-molded at the line speed of 10 m/min or more and 30 m/min or less, with the compression line pressure of 100 kgf/cm or more and 500 kgf/cm or less.

The method of manufacturing a light diffusion sheet of the present embodiment allows the dimension Wr occupied by the curved portion at the top portion of the ridge 23 in the arrangement direction of the recesses 22 to be 30% or less of the arrangement pitch P of the recesses 22. This enables manufacturing of the first light diffusion sheet 43 with a steep top portion of the ridge 23 and excellent luminance uniformity.

Further, the method of manufacturing a light diffusion sheet of the present embodiment allows the maximum height difference d between the straight line connecting the intersections 23a and the ridge 23 to be 1 µm or more and 10 µm or less. That is, the first light diffusion sheet 43 with the ridge 23 recessed between intersections 23a and the portions of the intersections 23a raised can be obtained. Therefore, even when the first light diffusion sheet 43 is layered with another first light diffusion sheet 43 or with another optical sheet, the ridge 23 hardly contacts the other optical sheet and the like between the intersections 23a, which makes wear and damage less likely. Further, since the intersections 23a point-contact the other optical sheet and the like, sliding is caused such that wear and damage are less likely. Thus, the first light diffusion sheet 43 excellent in scratch resistance can be manufactured.

Further, the method of manufacturing a light diffusion sheet of the present embodiment employs extrusion molding, which allows manufacturing of the first light diffusion sheet 43 of the present embodiment at low costs.

### (Examples)

The first light diffusion sheets 43 of Examples will be described below in comparison with Comparative Examples.

### <Measurement of Shape, Dimension, and Angle of Recesses>

The shapes of the recesses 22 formed in the first light diffusion sheet 43 of each example described later were observed by using a laser microscope VK-100 manufactured by Keyence Corporation. Specifically, measurements were conducted for: the cross-sectional shape of the ridge 23 of the recess 22 formed in an inverted square pyramid (cross-sectional shapes shown in FIG. 6, FIG. 7, FIG. 9, FIG. 10); the maximum height differences dx, dy shown in FIG. 6 and FIG. 7 (the maximum distance between the straight line connecting the intersections 23a and the ridge 23) and their average d; the heights Hx, Hy shown in FIG. 9 and FIG. 10 (the height from the center 22a of the recess 22 to the top point of the ridge 23) and their average H; the dimensions Wrx, Wry shown in FIG. 9 and FIG. 10 (the dimensions occupied by the curved portion at the top portion of the ridge 23 in the X-direction and Y-direction) and their average Wr; the arrangement pitches Px, Py of the recesses 22 shown in FIG. 6 and FIG. 7 (horizontal distances between intersections 23a in X-direction and Y-direction) and their average P, and the ratio Wr/P (unit: %) of the dimension Wr to the arrangement pitch P; and the angles θx, θy shown in FIG. 9 and FIG. 10 (an angle formed between the sheet surface of the first light diffusion sheet 43 and the wall surfaces of the recesses 22 (inclined surfaces of the inverted square pyramid) in X-direction and Y-direction).

### <Measurement of Optical Properties>

Haze and light transmittance at 450 nm wavelengths were measured as optical properties of the first light diffusion sheet 43 of each example described later. Haze was measured in accordance with JIS K-7105 using an HZ-2 manufactured by Suga Test Instruments Co., Ltd. with light entering from the surface with the recesses 22 formed in an inverted square pyramid (first surface 43a). Further, the light transmittance at a wavelength of 450 nm was measured by using V-670 manufactured by JASCO Corporation, with light entering from the surface with the recesses 22 formed in an inverted square pyramid (first surface 43a).

### <Evaluation of Scratch Resistance>

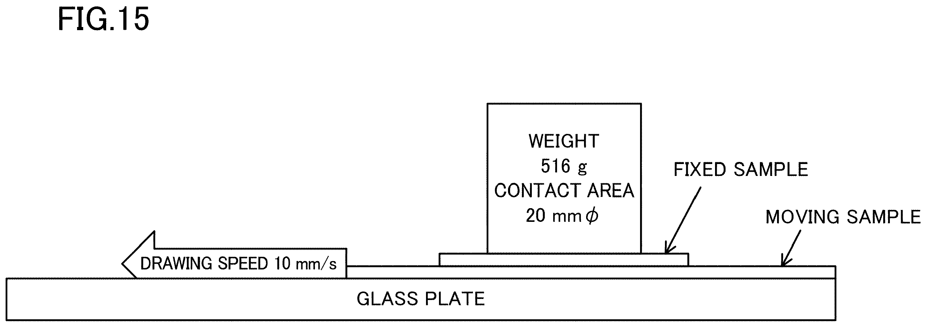

For the scratch resistance test of the first light diffusion sheet 43 in each example described below, an apparatus shown in FIG. 15 was used. As shown in FIG. 15, a moving sample and a fixed sample are layered in this order on a glass plate, and a weight of 516 g is placed from above on a circular area of 20 mm in diameter. Then, the moving sample was drawn at a drawing speed of 10 mm/second and moved by 100 mm, and the levels of scratches on the friction surfaces between the moving sample and the fixed sample were visually inspected and determined. The fixed sample was a first light diffusion sheet 43 and its lower surface was the first surface 43a (the surface having recesses 22 formed in an inverted square pyramid shape). The moving sample was another first light diffusion sheet 43 and its upper surface was the second surface 43b (matte surface). The inspection and determination were performed on both the lower surface of the fixed sample (the surface with recesses 22 in the inverted square pyramid shape) and the upper surface of the moving sample (the matte surface).

Evaluation in inspection and determination is based on the following criteria.
AA: No scratch is visually observed, and the light diffusion sheet has very excellent scratch resistance.
A: Almost no scratch is visually observed, and the light diffusion sheet has remarkably excellent scratch resistance.
B: Scratches are slightly visible, and the light diffusion sheet has scratch resistance that was excellent to some extent.
C: Some scratches are visible, and the light diffusion sheet has scratch resistance that is close to a lower limit somehow acceptable.
X: Many scratches are clearly visible, and the light diffusion sheet has inferior scratch resistance.

### <Measurement of Luminance and Luminance Uniformity>

The configuration of the backlight unit 40 shown in FIG. 2 and FIG. 3 were adopted for measuring the luminance and the luminance uniformity of the first light diffusion sheet 43 of each example described later. That is, on the small light sources 42 (LED array) arranged in an array, two first light diffusion sheets 43 each having the recesses 22 in an inverted square pyramid shape obtained in the examples described later were layered with their first surfaces 43a having the recesses 22 facing the light sources 42. On the layers of the first light diffusion sheets 43, a single second light diffusion sheet 44 was layered with its second surface 44b that is a mirror surface towards the light sources 42. The second light diffusion sheet 44 was 120 µm in thickness and obtained by blending the same diffusion agent with the same aromatic polycarbonate resin as those of Example 18 described later. The second light diffusion sheet 44 was manufactured through the same method as Example 1 described later, by using a mirror surface roll as one roll and a roll having a surface in a random matte shape (surface roughness Ra = 2.5 µm) that is the same as Example 1 as another roll. The surface roughness Ra on the side of the matte surface (first surface 44a) of the second light diffusion sheet 44 was 1.6 µm, and the surface roughness Ra on the side of the mirror surface (second surface 44b) was 0.4 µm. On the second light diffusion sheet 44, two prism sheets 45, 46 were layered. With the above configuration, the luminance and the luminance uniformity were measured. As the LED array, one with an LED pitch of 3 mm was used. As the LEDs (small light sources 42), blue LEDs (product number XPGDRY-L1-0000-00501) manufactured by Cree LED, Inc. were used.

In the measurement of the luminance uniformity, first, the cross-sectional luminance was obtained along a diagonal line L passing directly above the LEDs (small light sources 42) of the LED array (6 × 6) shown in FIG. 3. Then, the average and the standard deviation of the cross-sectional luminance were calculated, and the luminance uniformity (%) was calculated according to the following formula: Luminance Uniformity (%) = (Average of Cross-Sectional Luminance) ÷ (Standard Deviation of Cross-Sectional Luminance) × 100. The higher the value of the luminance uniformity thus obtained is, the more uniform the luminance is.

The evaluation criteria of luminance uniformity are as follows.
AA: The light diffusion sheet exhibits the most excellent uniformity with a luminance uniformity of 210% or more. The luminance unevenness is not at all visible by visual observation.
A: The light diffusion sheet exhibits excellent uniformity with a luminance uniformity of 200% or more and less than 210%. The luminance unevenness is hardly visible by visual observation.
B: The light diffusion sheet exhibits an acceptable level of uniformity with a luminance uniformity of 190% or more and less than 200%. The luminance unevenness is slightly visible by visual observation.
C: The light diffusion sheet exhibits a minimum acceptable level of uniformity with a luminance uniformity of 180% or more and less than 190. The luminance unevenness is visible by visual observation.
X: The light diffusion sheet exhibits inferior uniformity, with a luminance uniformity of less than 180%. The luminance unevenness is clearly visible by visual observation.

The evaluation criteria of luminance are as follows.
A: The light diffusion sheet has an average cross-sectional luminance of 3150 cd/m² or more.
B: The light diffusion sheet has an average cross-sectional luminance of 3100 cd/m² or more and less than 3150 cd/m².
C: The light diffusion sheet has an average cross-sectional luminance of 3050 cd/m² or more and less than 3100 cd/m².

### <Overall Evaluation>

The overall evaluation of the first light diffusion sheet 43 of each example described later was performed according to the following criteria, on the basis of the results of the scratch resistance test and the evaluation results of the luminance uniformity.
AA: The light diffusion sheet is overall the most excellent with a rating of A or above including two or more AAs in the evaluation results of the scratch resistance tests for both of the surface with inverted square pyramids and the matte surface and the evaluation result of the luminance uniformity.
A: The light diffusion sheet is overall the most excellent with a rating of A or above in the evaluation results of the scratch resistance tests for both of the surface with inverted square pyramids and the matte surface and the evaluation result of the luminance uniformity (Note, however, that AA-rated products are excluded).
B: The light diffusion sheet is overall excellent with a rating of B or above in the evaluation results of the scratch resistance tests for both of the surface with inverted square pyramids and the matte surface and the evaluation result of the luminance uniformity (Note, however, that AA-rated or A-rated products are excluded).
C: The light diffusion sheet overall has a minimum or higher performance with a rating of C or above in the evaluation results of the scratch resistance tests for both of the surface with inverted square pyramids and the matte surface and the evaluation result of the luminance uniformity (Note, however, that AA-rated, A-rated, or B-rated products are excluded).
X: The light diffusion sheet is poor overall, with a rating of x in any one or more of the evaluation results of the scratch resistance tests for both of the surface with inverted square pyramids and the matte surface and the evaluation result of the luminance uniformity.

### <Example 1>

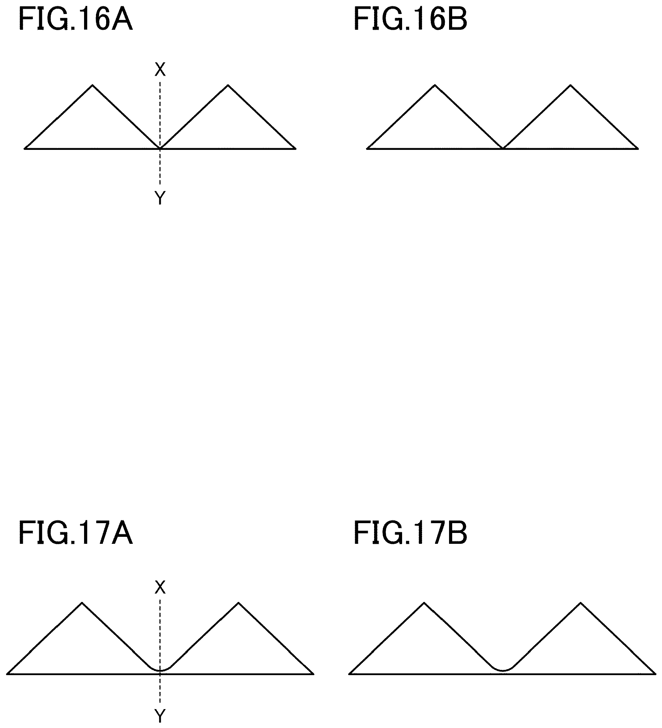

A method for manufacturing the first light diffusion sheet 43 of Example 1 is as follows. First, an aromatic polycarbonate resin was input to an extruder under the condition that a melt mass flow rate measured in compliance with ISO1133 is 15 g/10 min, molten, kneaded, and then extruded from a T-die. Then, two metal rolls, one of which was a roll having on its surface shapes (square pyramids arranged in a pitch of 100 µm, each having a height of 50 µm, and a top angle of 90 degrees) shown in (A) and (B) of FIG. 16 ((B) is a diagram showing a shape from a cross-sectional direction along the line X-Y of (A)) and the other one of which was a roll having a random matte shape (surface roughness Ra = 2.5 µm), were used to sandwich the molten resin extruded from the T-die between the two rolls and cooled while transferring the shapes of the rolls on the molten resin. This way, as shown in Table 1, a single-layered light diffusion sheet of 180µm in thickness was manufactured by extrusion-molding. The light diffusion sheet had, on one of its surfaces, recesses in a shape of (inverted) pyramid whose depth depends on the square pyramid on the roll, and had, on its other surface, a matte surface with the surface roughness Ra = 1.67 µm. Note that, regarding the molding conditions, a light diffusion sheet was obtained by performing pressurization so that the line speed was 17 m/min, the compression force (compression line pressure) between two rolls was 280 kgf/cm, at a resin temperature condition (230°C to 310°C) that allows favorable shape transfer on to the polycarbonate resin and that allows favorable separation from the rolls, as shown in Table 1.

**[Table 1]**

| | Raw materials | | Molding method and conditions | | | Film thickness | Surface roughness Ra of matte surface | Target pitch of inverted quadrangular pyramids | Target top angle of inverted quadrangular pyramid |
|---|---|---|---|---|---|---|---|---|---|
| | Resin composition | Content of diffusion agent | Molding method | Line speed | Compression line pressure | | | | |
| | | | | m/min | kgf/cm | µm | µm | µm | Degree |
| Example 1 | 100 | 0 | Extrusion molding | 17 | 280 | 180 | 1.67 | 100 | 90 |
| Example 2 | 100 | 0 | Extrusion molding | 17 | 280 | 180 | 1.69 | 100 | 85 |
| Example 3 | 100 | 0 | Extrusion molding | 17 | 280 | 180 | 1.71 | 100 | 80 |
| Comparative Example 1 | 100 | 0 | Compression molding | - | - | 180 | 1.67 | 100 | 90 |
| Comparative Example 2 | 100 | 0 | Compression molding | - | - | 180 | 1.65 | 100 | 85 |
| Comparative Example 3 | 100 | 0 | Compression molding | - | - | 180 | 1.69 | 100 | 80 |

The shapes of the recesses 22 (inverted square pyramids) formed in the first light diffusion sheet 43 of Example 1 manufactured as described above were observed by using a laser microscope VK-100 manufactured by Keyence Corporation. Specifically, measurements were conducted for: the cross-sectional shape of the ridge 23 of the recess 22 formed in an inverted square pyramid (cross-sectional shapes shown in FIG. 6, FIG. 7, FIG. 9, FIG. 10); the maximum height differences dx, dy shown in FIG. 6 and FIG. 7 (the maximum distance between the straight line connecting the intersections 23a and the ridge 23) and their average d; the heights Hx, Hy shown in FIG. 9 and FIG. 10 (the height from the center 22a of the recess 22 to the top point of the ridge 23) and their average H; the dimensions Wrx, Wry shown in FIG. 9 and FIG. 10 (the dimensions occupied by the curved portion at the top portion of the ridge 23 in the X-direction and Y-direction) and their average Wr; the arrangement pitches Px, Py of the recesses 22 shown in FIG. 6 and FIG. 7 (horizontal distances between intersections 23a in X-direction and Y-direction) and their average P, and the ratio Wr/P (unit: %) of the dimension Wr to the arrangement pitch P; and the angles θx, θy shown in FIG. 9 and FIG. 10 (an angle formed between the sheet surface of the first light diffusion sheet 43 and the wall surfaces of the recesses 22 (inclined surfaces of the inverted square pyramid) in X-direction and Y-direction).

### <Examples 2 and 3>

The method for manufacturing the first light diffusion sheet 43 of Example 2 adopted the same conditions as those of Example 1 as shown in Table 1, except in that a roll having square pyramid shapes arranged at a pitch of 100 µm, each having a height of 54.6 µm and a top angle of 85 degrees, was used as one of the metal rolls having the square pyramid shapes.

The method for manufacturing the first light diffusion sheet 43 of Example 3 adopted the same conditions as those of Example 1 as shown in Table 1, except in that a roll having square pyramid shapes arranged at a pitch of 100 µm, each having a height of 59.6 µm and a top angle of 80 degrees, was used as one of the metal rolls having the square pyramid shapes.

### <Comparative Examples 1 to 3>

In Comparative Example 1, the same aromatic polycarbonate resin as the one used in Example 1 was used to prepare a 1 mm thick original press plate. Then, the original press plate was sandwiched between two dies and pressed for 20 minutes in a pressing machine having a heating/cooling device, at conditions of a press plate temperature of 250°C and a surface pressure of 200 kg/cm². The two dies included: a flat plate die having, on its surface, shapes (square pyramids similar to those of Example 1 except in that the valley portion of each pyramid shape is rounded into a curved surface with a radius of curvature of 4.2 µm) as shown in (A) and (B) of FIG. 17 ((B) is a diagram showing a shape seen from a cross-sectional direction along the line X-Y of (A)); and a flat plate die having, on its surface, the same random matte shape (surface roughness Ra = 2.5 µm) as Example 1. After that, the press plate temperature was cooled to 20°C while pressurization is performed, and the pressurization is kept until the resin plate is sufficiently cooled down. This way, a light diffusion sheet of 180 µm in thickness as shown in Table 1 was manufactured through the compression molding.

In Comparative Example 2, an original press plate was manufactured in the same manner as in Comparative Example 1. Then, a light diffusion sheet of 180 µm in thickness as shown in Table 1 was manufactured through the compression molding by heating, pressurizing, and cooling with a pressing machine at the same conditions as those in Comparative Example 1, except in using a flat plate die having, on its surface, shapes that are each obtained by rounding a valley portion of the same square pyramid as Example 2 into a curved surface with a radius of the curvature of 4.2 µm as in the case of Comparative Example 1.

In Comparative Example 3, an original press plate was manufactured in the same manner as in Comparative Example 1. Then, a light diffusion sheet of 180 µm in thickness as shown in Table 1 was manufactured through the compression molding by heating, pressurizing, and cooling with a pressing machine at the same conditions as those in Comparative Examples 1 and 2, except in using a flat plate die having, on its surface, shapes that are each obtained by rounding a valley portion of the same square pyramid as Example 3 into a curved surface with a radius of the curvature of 4.2 µm as in the case of Comparative Examples 1 and 2.

### <Evaluation of Examples 1 to 3 and Comparative Examples 1 to 3>

For the first light diffusion sheets 43 obtained in Examples 1 to 3, shapes, dimensions, angles, and the like of the elements obtained by the measurements are shown in Table 2 along with those of Comparative Examples 1 to 3. The measurement results of optical properties, the results of the scratch resistance tests, the evaluation results of the luminance and the luminance uniformity, as well as the overall evaluation results are shown in Table 3 along with those of Comparative Examples 1 to 3.

**[Table 2]**

| | Shape of inverted square pyramid | | | | | | | | | | | | | | | | | |
|---|---|---|---|---|---|---|---|---|---|---|---|---|---|---|---|---|---|---|
| | Cross-sectional shapes of ridge along AxBx, AyBy | Maximum distance between straight lines connecting intersections and ridge | | | Vertical cross-sectional shape of ridge center portion | Height H from center point of inverted quadrangular pyramid to highest point of center portion of ridge | | | Width Wrx, Wry of curved portion of cross-section of ridge center portion | | | Pitch P of inverted quadrangular pyramid | | | Ratio Wr/P of width Wr of curved portion to pitch P | Angle θ formed by inclined surface of inverted square pyramid and diffusion sheet surface | | |
| | | dx | dy | Average | | Hx | Hy | Average H of Hx, Hy | Wrx | Wry | Average Wr of W | Px | Py | Average P of Px, Py | Wr/P | θx | θy | Average θ of θx, θy |
| | | µm | µm | µm | | µm | µm | µm | µm | µm | µm | µm | µm | µm | % | Degree | Degree | Degree |
| Example 1 | Generally parabolic | 1.8 | 1.8 | 1.8 | Arc | 45.9 | 46.8 | 46.4 | 6.8 | 5.1 | 6.0 | 99.2 | 98.8 | 99.0 | 6.0 | 44.9 | 44.7 | 44.8 |
| Example 2 | Generally parabolic | 2.0 | 2.1 | 2.1 | Arc | 49.1 | 49.6 | 49.4 | 7.1 | 5.5 | 6.3 | 99.3 | 99.3 | 99.3 | 6.3 | 46.8 | 46.6 | 46.7 |
| Example 3 | Generally parabolic | 1.9 | 2.0 | 2.0 | Arc | 53.6 | 54.1 | 53.9 | 6.9 | 5.4 | 6.2 | 99.4 | 99.2 | 99.3 | 6.2 | 49.6 | 49.8 | 49.7 |
| Comparative Example 1 | Straight line | 0 | 0 | 0 | Arc | 48.2 | 48.1 | 48.2 | 6.0 | 6.0 | 6.0 | 99.2 | 99.3 | 99.3 | 6.0 | 44.2 | 44.4 | 44.3 |
| Comparative Example 2 | Straight line | 0 | 0 | 0 | Arc | 52.5 | 52.3 | 52.4 | 6.1 | 6.2 | 6.2 | 99.2 | 99.6 | 99.4 | 6.2 | 46.6 | 46.8 | 46.7 |
| Comparative Example 3 | Straight fine | 0 | 0 | 0 | Arc | 57.2 | 57 | 57.1 | 6.1 | 6.1 | 6.1 | 99.5 | 99.5 | 99.5 | 6.1 | 50.0 | 50.2 | 50.1 |

**[Table 3]**

| | Optical properties | | Evaluation of physical properties | | | | Overall evaluation |
|---|---|---|---|---|---|---|---|
| | Haze (Light from certain surface of inverted quadrangular pyramid) | Light transmittance (450nm) (Light from certain surface of inverted quadrangular pyramid) | | | | | |
| | | | Scratch resistance test | | Luminance uniformity | Luminance | |
| | % | % | Surface with inverted quadrangular pyramids | Matte surface | | | |
| Example 1 | 92.6 | 98.5 | C | AA | B | C | C |
| Example 2 | 92.8 | 101.1 | C | AA | A | B | C |
| Example 3 | 93.0 | 107.7 | C | AA | AA | A | C |
| Comparative Example 1 | 92.7 | 98.3 | X | AA | B | C | X |
| Comparative Example 2 | 93.0 | 101.0 | X | AA | A | B | X |
| Comparative Example 3 | 93.2 | 107.5 | X | AA | AA | A | X |

It should be understood from the results shown in Table 2 and Table 3 that, in the first light diffusion sheets 43 obtained in Examples 1 to 3, having recesses 22 formed in an inverted square pyramid shape, the maximum height difference d between the straight line connecting the intersections 23a and the ridge 23 is 1.0 µm or more, and the ridge 23 between the intersections 23a has a generally parabolically recessed shape. Therefore, wear and damage attributed to the ridge 23 are less likely even if any of these first light diffusion sheets 43 is used with another optical sheet, consequently yielding favorable results in the scratch resistance test.

In Comparative Examples 1 to 3, on the other hand, the maximum height difference d is 0 µm, resulting in a horizontal shape of the ridge 23 between the intersections 23a without a recessed portion of the ridge 23, despite the presence of the curved surface with the radius of curvature of approximately 4.2 µm near the top point of the ridge 23. Therefore, scratches attributed to the ridge 23 take place in the scratch resistance test, resulting in an inferior scratch resistance.

Further, the ratio Wr/P is 10% or less and the steep top portion of the ridge 23 is maintained, resulting in favorable luminance uniformities similar to one another, in each of Example 1 and Comparative Example 1, Example 2 and Comparative Example 2, and Example 3 and Comparative Example 3.

Based on the above results, Examples 1 to 3 were rated "C" while Comparative Examples 1 to 3 were rated "X" in their overall evaluations.

### <Examples 4 to 10 and Comparative Example 4>

In Examples 4 to 7, a light diffusion sheet was manufactured through the same method as Example 1 except in that the line speed out of the molding conditions was changed to 15 m/min to 4 m/min, as shown in Table 4.

In Examples 8 to 10 and Comparative Example 4, a light diffusion sheet was manufactured through the same method as Example 1 except in that the compression line pressure between two rolls, out of the molding conditions, was changed to 180 kgf/cm to 40 kgf/cm, as shown in Table 4.

**[Table 4]**

| | Raw materials | | Molding method and conditions | | | Film thickness | Surface roughness Ra of matte surface | Target pitch of inverted quadrangular pyramids | Target top angle of inverted quadrangular pyramid |
|---|---|---|---|---|---|---|---|---|---|
| | Resin composition | Content of diffusion agent | Molding method | Line speed | Compression line pressure | | | | |
| | | | | m/min | kgf/cm | µm | µm | µm | Degree |
| Example 4 | 100 | 0 | Extrusion molding | 15 | 280 | 180 | 1.71 | 100 | 90 |
| Example 5 | 100 | 0 | Extrusion molding | 13 | 280 | 180 | 1.69 | 100 | 90 |
| Example 6 | 100 | 0 | Extrusion molding | 11 | 280 | 180 | 1.65 | 100 | 90 |
| Example 7 | 100 | 0 | Extrusion molding | 4 | 280 | 180 | 1.63 | 100 | 90 |
| Example 8 | 100 | 0 | Extrusion molding | 17 | 180 | 180 | 1.61 | 100 | 90 |
| Example 9 | 100 | 0 | Extrusion molding | 17 | 150 | 180 | 1.69 | 100 | 90 |
| Example 10 | 100 | 0 | Extrusion molding | 17 | 100 | 180 | 1.67 | 100 | 90 |
| Comparative Example 4 | 100 | 0 | Extrusion molding | 17 | 40 | 180 | 1.65 | 100 | 90 |

### <Evaluation of Examples 4 to 10 and Comparative Example 4>

For the first light diffusion sheets 43 obtained in Examples 4 to 10, shapes, dimensions, angles, and the like of the elements obtained by the measurements are shown in Table 5 along with those of Comparative Example 4. The measurement results of optical properties, the results of the scratch resistance tests, the evaluation results of the luminance and the luminance uniformity, as well as the overall evaluation results are shown in Table 6 along with those of Comparative Example 4.

**[Table 5]**

| | Shape of inverted square pyramid | | | | | | | | | | | | | | | | | |
|---|---|---|---|---|---|---|---|---|---|---|---|---|---|---|---|---|---|---|
| | Cross-sectional shapes of ridge along AxBx, AyBy | Maximum distance between straight lines connecting intersections and ridge | | | Vertical cross-sectional shape of ridge certer portion | Height H from certer poirt of inverted quadrangular pyramid to highest poirt of center portion of ridge | | | Width Wrx, Wry of curved portion of cross-section of ridge center portion | | | Pitch P of inverted quadrangular pyramid | | | Ratio Wr/P of width Wr of curved portion to pitch P | Angle θ formed by inclined surface of inverted square pyramid and diffusion sheet surface | | |
| | | dx | dy | Average | | Hx | Hy | Average H ofHx, Hy | Wrx | Wry | Average Wr of W | Px | Py | Average P of Px, Py | Wr/P | θx | θy | Average θ of θx, θy |
| | | µm | µm | µm | | µm | µm | µm | µm | µm | µm | µm | µm | µm | % | Degree | Degree | Degree |
| Example 4 | Generally parabolic | 1.8 | 1.9 | 1.9 | Arc | 45.7 | 45.5 | 45.6 | 7.0 | 6.0 | 6.5 | 98.8 | 98.8 | 98.8 | 6.6 | 44.5 | 44.8 | 44.7 |
| Example 5 | Generally parabolic | 1.9 | 1.9 | 1.9 | Arc | 45.7 | 45.5 | 45.6 | 7.5 | 6.4 | 7.0 | 99.8 | 99.4 | 99.6 | 7.0 | 44.6 | 44.9 | 44.8 |
| Example 6 | Generally parabolic | 2.0 | 2.0 | 2.0 | Arc | 45.1 | 45.4 | 45.3 | 7.4 | 6.7 | 7.1 | 99.8 | 99.4 | 99.6 | 7.1 | 44.8 | 44.8 | 44.8 |
| Example 7 | Generally parabolic | 2.0 | 2.1 | 2.1 | Arc | 40.1 | 40.3 | 40.2 | 18.3 | 17.9 | 18.1 | 98.9 | 99.2 | 99.1 | 18.3 | 44.7 | 44.9 | 44.8 |
| Example 8 | Generally parabolic | 1.9 | 2.0 | 2.0 | Arc | 43.2 | 42.5 | 42.9 | 12.6 | 12.4 | 12.5 | 98.9 | 99.1 | 99.0 | 12.6 | 44.5 | 44.6 | 44.6 |
| Example 9 | Generally parabolic | 1.8 | 1.8 | 1.8 | Arc | 41.5 | 41.2 | 41.4 | 15.5 | 15.7 | 15.6 | 99.4 | 99.2 | 99.3 | 15.7 | 44.9 | 44.7 | 44.8 |
| Example 10 | Generally parabolic | 1.7 | 1.8 | 1.8 | Arc | 38.5 | 38.9 | 38.7 | 25.3 | 24.5 | 24.9 | 99.5 | 99.4 | 99.45 | 25.0 | 45.1 | 45.2 | 45.2 |
| Comparative Example 4 | Generally parabolic | 1.6 | 1.7 | 1.7 | Arc | 26.5 | 25.6 | 26.1 | 45.6 | 44.7 | 45.2 | 99.5 | 99.3 | 99.4 | 45.4 | 45.0 | 45.2 | 45.1 |

**[Table 6]**

| | Optical properties | | Evaluation of physical properties | | | | Overall evaluation |
|---|---|---|---|---|---|---|---|
| | Haze (Light from certain surface of inverted quadrangular pyramid) | Light transmittance (450nm) (Light from certain surface of inverted quadrangular pyramid) | | | | | |
| | | | Scratch resistance test | | Luminance uniformity | Luminance | |
| | % | % | Surface with inverted quadrangular pyramids | Matte surface | | | |
| Example 4 | 92.9 | 98.7 | C | AA | B | C | C |
| Example 5 | 93.0 | 98.8 | C | AA | B | C | C |
| Example 6 | 93.1 | 99.0 | C | AA | B | C | C |
| Example 7 | 93.5 | 100.5 | C | AA | C | B | C |
| Example 8 | 93.3 | 99.6 | C | AA | B | C | C |
| Example 9 | 93.4 | 100.1 | C | AA | C | C | C |
| Example 10 | 93.6 | 101.3 | C | AA | C | C | C |
| Comparative Example 4 | 93.8 | 105.1 | C | AA | X | B | X |

It should be understood from the results shown in Table 5 and Table 6 that, in the first light diffusion sheets 43 obtained in Examples 4 to 10 and Comparative Example 4, having recesses 22 formed in an inverted square pyramid shape, the maximum height difference d between the straight line connecting the intersections 23a and the ridge 23 is 1.0 µm or more, and the ridge 23 between the intersections 23a has a generally parabolically recessed shape. Therefore, wear and damage attributed to the ridge 23 are less likely even if any of these first light diffusion sheets 43 is used with another optical sheet, consequently yielding favorable results in the scratch resistance test.

Further, the ratio Wr/P is 30% or less and the steep top portion of the ridge 23 is maintained, resulting in favorable luminance uniformities similar to one another, in each of Examples 4 to 10.

However, the ratio Wr/P exceeds 30% and the steep top portion of the ridge 23 is not maintained, resulting in an inferior luminance uniformity, in Comparative Example 4.

Based on the above results, Examples 4 to 10 were rated "C" while Comparative Example 4 was rated "X" in their overall evaluations.

### <Examples 11 to 14>

The method for manufacturing the first light diffusion sheet 43 of Example 11 adopted almost the same conditions as those of Example 1, except in that a roll having square pyramid shapes arranged at a pitch of 180 µm, each having a height of 90.0 µm and a top angle of 90 degrees, was used as one of the two metal rolls having the square pyramid shapes, to manufacture a light diffusion sheet of 200 µm in thickness as shown in Table 7.

**[Table 7]**

| | Raw materials | | Molding method and conditions | | | Film thickness | Surface roughness Ra of matte surface | Target pitch of inverted quadrangular pyramids | Target top angle of inverted quadrangular pyramid |
|---|---|---|---|---|---|---|---|---|---|
| | Resin composition | Content of diffusion agent | Molding method | Line speed | Compression line pressure | | | | |
| | | | | m/min | kef/cm | µm | µm | µm | Degree |
| Example 11 | 100 | 0 | Extrusion molding | 17 | 250 | 200 | 1.59 | 180 | 90 |
| Example 12 | 100 | 0 | Extrusion molding | 17 | 250 | 200 | 1.61 | 180 | 85 |
| Example 13 | 100 | 0 | Extrusion molding | 17 | 250 | 200 | 1.65 | 180 | 80 |
| Example 14 | 100 | 0 | Extrusion molding | 17 | 250 | 200 | 1.68 | 180 | 75 |
| Example 15 | 100 | 0 | Extrusion molding | 15 | 250 | 200 | 1.64 | 180 | 80 |
| Example 16 | 100 | 0 | Extrusion molding | 13 | 250 | 200 | 1.65 | 180 | 80 |
| Example 17 | 100 | 0 | Extrusion molding | 11 | 250 | 200 | 1.69 | 180 | 80 |
| Comparative Example 5 | 100 | 0 | Compression molding | - | - | 200 | 1.66 | 180 | 90 |

The method for manufacturing the first light diffusion sheet 43 of Example 12 adopted almost the same conditions as those of Example 1, except in that a roll having square pyramid shapes arranged at a pitch of 180 µm, each having a height of 98.2 µm and a top angle of 85 degrees, was used as one of the two metal rolls having the square pyramid shapes, to manufacture a light diffusion sheet of 200 µm in thickness as shown in Table 7.

The method for manufacturing the first light diffusion sheet 43 of Example 13 adopted almost the same conditions as those of Example 1, except in that a roll having square pyramid shapes arranged at a pitch of 180 µm, each having a height of 107.3 µm and a top angle of 80 degrees, was used as one of the two metal rolls having the square pyramid shapes, to manufacture a light diffusion sheet of 200 µm in thickness as shown in Table 7.

The method for manufacturing the first light diffusion sheet 43 of Example 14 adopted almost the same conditions as those of Example 1, except in that a roll having square pyramid shapes arranged at a pitch of 180 µm, each having a height of 117.3 µm and a top angle of 75 degrees, was used as one of the two metal rolls having the square pyramid shapes, to manufacture a light diffusion sheet of 200 µm in thickness as shown in Table 7.

### <Examples 15 to 17 and Comparative Example 5>

In Examples 15 to 17, a light diffusion sheet of 200 µm in thickness was manufactured by using the same rolls as those used in Example 13 with the line speed out of the molding conditions changed to 15 m/min to 11 m/min, as shown in Table 7.

In Comparative Example 5, an original press plate was manufactured in the same manner as in Comparative Example 1. Then, a light diffusion sheet of 200 µm in thickness as shown in Table 7 was manufactured through the compression molding by heating, pressurizing, and cooling with a pressing machine at the same conditions as those in Comparative Example 1, except in using a flat plate die having, on its surface, shapes that are each obtained by rounding a valley portion of the same square pyramid as Example 11 into a curved surface with a radius of the curvature of 4.2 µm as in the case of Comparative Example 1.

### <Evaluation of Examples 11 to 17 and Comparative Example 5>

For the first light diffusion sheets 43 obtained in Examples 11 to 17, shapes, dimensions, angles, and the like of the elements obtained by the measurements are shown in Table 8 along with those of Comparative Example 5. The measurement results of optical properties, the results of the scratch resistance tests, the evaluation results of the luminance and the luminance uniformity, as well as the overall evaluation results are shown in Table 9 along with those of Comparative Example 5.

**[Table 8]**

| | Shape of inverted square pyramid | | | | | | | | | | | | | | | | | |
|---|---|---|---|---|---|---|---|---|---|---|---|---|---|---|---|---|---|---|
| | Cross-sectional shapes of ridge along AxBx, AyBy | Maximum distance between straight lines connecting intersections and ridge | | | Vertical cross-sectional shape of ridge center portion | Height H from center poirt of inverted quadrangular pyramid to highest point of center portion of ridge | | | Width Wrx, Wry of curved portion of cross-section of ridge center portion | | | Pitch P of inverted quadrangular pyramid | | | Ratio Wr/P of width Wr of curved portion to pitch P | Angle θ formed by inclined surface of inverted square pyramid and diffusion sheet surface | | |
| | | dx | dy | Average | | Hx | Hy | Average H of Hx, Hv | Wrx | Wry | Average Wr of W | Px | Py | Average P of Px, Pv | Wr/P | θx | θy | Average θ of θx, θy |
| | | µm | µm | µm | | µm | µm | µm | µm | µm | µm | µm | µm | µm | % | Degree | Degree | Degree |
| Example 11 | Generally parabolic | 3.3 | 3.0 | 3.2 | Arc | 84.9 | 84.0 | 84.5 | 11.1 | 10.6 | 10.9 | 187.2 | 183.7 | 185.5 | 5.9 | 45.0 | 45.2 | 45.1 |
| Example 12 | Generally parabolic | 4.3 | 4.9 | 4.6 | Arc | 89.5 | 89.6 | 89.6 | 11.5 | 10.9 | 11.2 | 187.6 | 186.1 | 186.9 | 6.0 | 47.1 | 47.0 | 47.1 |
| Example 13 | Generally parabolic | 3.9 | 4.3 | 4.1 | Arc | 98.4 | 99.3 | 98.9 | 11.1 | 10.6 | 10.9 | 185.3 | 186.7 | 186.0 | 5.8 | 49.5 | 49.6 | 49.6 |
| Example 14 | Generally parabolic | 4.0 | 4.5 | 4.3 | Arc | 109.1 | 108.5 | 108.8 | 11.3 | 10.7 | 11.0 | 187.4 | 186.7 | 187.1 | 5.9 | 52.1 | 52.3 | 52.2 |
| Example 15 | Generally parabolic | 3.5 | 4.6 | 4.1 | Arc | 98.2 | 98.8 | 98.5 | 11.8 | 11.2 | 11.5 | 188.0 | 188.7 | 188.4 | 6.1 | 49.7 | 49.9 | 49.8 |
| Example 16 | Generally parabolic | 3.3 | 4.4 | 3.9 | Arc | 98.5 | 99.2 | 98.9 | 12.0 | 11.3 | 11.7 | 186.8 | 185.8 | 186.3 | 6.3 | 50.0 | 50.2 | 50.1 |
| Example 17 | Generally parabolic | 4.0 | 5.1 | 4.6 | Arc | 98.2 | 98.7 | 98.5 | 14.4 | 13.7 | 14.1 | 186.4 | 186.7 | 186.6 | 7.5 | 49.6 | 49.8 | 49.7 |
| Comparative Example 5 | Straight line | 0 | 0 | 0 | Arc | 87.3 | 86.8 | 87.1 | 9.5 | 9.8 | 9.7 | 185.1 | 185 | 185.1 | 5.2 | 44.8 | 44.9 | 44.9 |

**[Table 9]**

| | Optical properties | | Evaluation of physical properties | | | | Overall evaluation |
|---|---|---|---|---|---|---|---|
| | Haze (Light from certain surface of inverted quadrangular pyramid) | Light transmittance (450nm) (Light from certain surface of inverted quadrangular pyramid) | | | | | |
| | | | Scratch resistance test | | Luminance uniformity | Luminance | |
| | % | % | Surface with inverted quadrangular pyramids | Matte surface | | | |
| Example 11 | 92.9 | 97.9 | A | AA | A | C | A |
| Example 12 | 93.1 | 102.0 | A | AA | AA | B | AA |
| Example 13 | 93.3 | 114.4 | A | AA | AA | A | AA |
| Example 14 | 93.4 | 116.0 | A | AA | AA | A | AA |
| Example 15 | 93.6 | 113.1 | A | AA | AA | A | AA |
| Example 16 | 93.9 | 111.2 | A | AA | AA | A | AA |
| Example 17 | 94.1 | 107.8 | A | AA | AA | A | AA |
| Comparative Example 5 | 93.0 | 98.1 | X | AA | A | C | x |

It should be understood from the results shown in Table 8 and Table 9 that, in the first light diffusion sheets 43 obtained in Examples 11 to 17, having recesses 22 formed in an inverted square pyramid shape, the maximum height difference d between the straight line connecting the intersections 23a and the ridge 23 is 2.5 µm or more, and the ridge 23 between the intersections 23a has a generally parabolically recessed shape. Therefore, wear and damage attributed to the ridge 23 are even less likely even if any of these first light diffusion sheets 43 is used with another optical sheet, consequently yielding the most favorable results in the scratch resistance test among the examples.

In Comparative Example 5, on the other hand, the maximum height difference d is 0 µm, resulting in a horizontal shape of the ridge 23 between the intersections 23a without a recessed portion of the ridge 23, despite the presence of the curved surface near the top point of the ridge 23. Therefore, scratches attributed to the ridge 23 take place in the scratch resistance test, resulting in an inferior scratch resistance.

Further, the ratio Wr/P is 10% or less and an even steeper top portion of the ridge 23 is maintained, resulting in significantly favorable luminance uniformities, in Examples 11 to 17 and Comparative Example 5. Particularly in Examples 11 to 17, a drop in the luminance uniformity attributed to the recessed shape of the ridge 23 between the intersections 23a was not visible, because the maximum height difference d was 5.0 µm or less.

Based on the above results, Example 11 was rated "A," Examples 12 to 17 were rated "AA" and were the most excellent, while Comparative Example 5 was rated "X" in their overall evaluations.

### <Examples 18 to 23>

In Example 18, a light diffusion sheet of 180 µm in thickness as shown in Table 10 was manufactured with the same conditions as those in Example 1, except in that 1 part by mass of silicone composite powder (average particle diameter of 2.0µm) as a diffusion agent was mixed in advance with 99 parts by mass of aromatic polycarbonate resin used in Example 1, and the mixture was supplied to an extruder to perform melting and kneading.

**[Table 10]**

| | Raw materials | | Molding method and conditions | | | Film thickness | Surface roughness Ra of matte surface | Target pitch of inverted quadrangular pyramids | Target top angle of inverted quadrangular pyramid |
|---|---|---|---|---|---|---|---|---|---|
| | Resin composition | Content of diffusion agent | Molding method | Line speed | Compression line pressure | | | | |
| | | | | m/min | kgf/cm | µm | µm | µm | Degree |
| Example 18 | 99.0 | 1.0 | Extrusion molding | 17 | 280 | 180 | 1.65 | 100 | 90 |
| Example 19 | 99.0 | 1.0 | Extrusion molding | 15 | 280 | 180 | 1.69 | 100 | 90 |
| Example 20 | 99.0 | 1.0 | Extrusion molding | 14 | 280 | 180 | 1.68 | 100 | 90 |
| Example 21 | 99.0 | 1.0 | Extrusion molding | 12 | 280 | 180 | 1.64 | 100 | 90 |
| Example 22 | 99.0 | 1.0 | Extrusion molding | 11 | 280 | 180 | 1.67 | 100 | 90 |
| Example 23 | 99.0 | 1.0 | Extrusion molding | 9 | 280 | 180 | 1.63 | 100 | 90 |

In Examples 19 to 23, a light diffusion sheet of 180 µm in thickness was manufactured by using the same method as that used in Example 18 with the line speed out of the molding conditions changed to 15 m/min to 9 m/min, as shown in Table 10.

### <Evaluation of Examples 18 to 23>

For the first light diffusion sheets 43 obtained in Examples 18 to 23, shapes, dimensions, angles, and the like of the elements obtained by the measurements are shown in Table 11. The measurement results of optical properties, the results of the scratch resistance tests, the evaluation results of the luminance and the luminance uniformity, as well as the overall evaluation results are shown in Table 12.

**[Table 11]**

| | Shape of inverted square pyramid | | | | | | | | | | | | | | | | | |
|---|---|---|---|---|---|---|---|---|---|---|---|---|---|---|---|---|---|---|
| | Cross-sectional shapes of ridge AyBy | Maximum distance between straight lines connecting intersections and ridge | | | Vertical cross-sectional shape of ridge center portion | Height H from center poirt of inverted quadrangular pyramid to highest point of center portion of ridge | | | Width Wrx, Wry of curved portion of cross-section of ridge center portion | | | PtchP of inverted quadrangular pyramid | | | Ratio Wr/P of width Wr of curved portion to pitch P | Angle θ formed by inclined surface of inverted square pyramid and diffusion sheet surface | | |
| | | dx | dy | Average | | Hx | Hy | Average H of Hx, Hy | Wrx | Wry | Average Wr of W | Px | Py | Average P of Px, Py | Wr/P | θx | θy | Average θ of θx, θy |
| | | µm | µm | µm | | µm | µm | µm | µm | µm | µm | µm | µm | µm | % | Degree | Degree | Degree |
| Example 18 | Generally parabolic | 1.5 | 1.7 | 1.6 | Arc | 46.2 | 46.2 | 46.2 | 7.0 | 5.3 | 6.2 | 99.6 | 100 | 99.8 | 6.2 | 44.2 | 44.6 | 44.4 |
| Example 19 | Generally parabolic | 1.5 | 1.7 | 1.6 | Arc | 45.8 | 46.1 | 46.0 | 7.5 | 5.7 | 6.6 | 99.4 | 99.1 | 99.3 | 6.6 | 44.8 | 44.9 | 44.9 |
| Example 20 | Generally parabolic | 1.5 | 2.1 | 1.8 | Arc | 45.7 | 46.4 | 46.1 | 8.0 | 5.9 | 7.0 | 99 | 98.4 | 98.7 | 7.0 | 44.9 | 44.8 | 44.9 |
| Example 21 | Generally parabolic | 2.0 | 1.9 | 2.0 | Arc | 45.9 | 46.1 | 46.0 | 10.1 | 7.2 | 8.7 | 100 | 98.3 | 99.2 | 8.7 | 45.1 | 45.2 | 45.2 |
| Example 22 | Generally parabolic | 2.1 | 1.9 | 2.0 | Arc | 42.1 | 43.2 | 42.7 | 9.1 | 6.6 | 7.9 | 99.2 | 99.5 | 99.4 | 7.9 | 45.2 | 45.2 | 45.2 |
| Example 23 | Generally parabolic | 2.4 | 2.4 | 2.4 | Arc | 43.6 | 44.2 | 43.9 | 14.4 | 10.8 | 12.6 | 98.4 | 98.6 | 98.5 | 12.8 | 45.1 | 45.0 | 45.1 |

**[Table 12]**

| | Optical properties | | Evaluation of physical properties | | | | Overall evaluation |
|---|---|---|---|---|---|---|---|
| | Haze (Light from certain surface of inverted quadrangular pyramid) | Light transmittance (450nm) (Light from certain surface of inverted quadrangular pyramid) | | | | | |
| | | | Scratch resistance test | | Luminance uniformity | Luminance | |
| | % | % | Surface with inverted quadrangular pyramids | Matte surface | | | |
| Example 18 | 94.5 | 89.0 | B | AA | C | B | C |
| Example 19 | 94.3 | 89.4 | B | AA | C | B | C |
| Example 20 | 94.4 | 89.6 | B | AA | C | B | C |
| Example 21 | 94.4 | 90.1 | B | AA | C | B | C |
| Example 22 | 94.3 | 90.2 | B | AA | C | B | C |
| Example 23 | 94.4 | 90.3 | B | AA | C | B | C |

It should be understood from the results shown in Table 11 and Table 12 that, in the first light diffusion sheets 43 obtained in Examples 18 to 23, having recesses 22 formed in an inverted square pyramid shape, the maximum height difference d between the straight line connecting the intersections 23a and the ridge 23 is 1.6 µm or more, and the ridge 23 between the intersections 23a has a generally parabolically recessed shape. Therefore, wear and damage attributed to the ridge 23 are less likely even if any of these first light diffusion sheets 43 is used with another optical sheet, consequently yielding favorable results in the scratch resistance test.

Further, the ratio Wr/P is within a range from 6% to 13% and the steep top portion of the ridge 23 is maintained, resulting in favorable luminance uniformities, in each of Examples 18 to 23.

Based on the above results, Examples 18 to 23 were rated "C."

### <Examples 24 to 27>

In Example 24, a light diffusion sheet of 120 µm in thickness as shown in Table 13 was manufactured with molding conditions shown in Table 13, by using the aromatic polycarbonate resin used in Example 1 and two metal rolls. One of the metal rolls was a roll having, on its surface, shapes (square pyramids arranged at a pitch of 100 µm, each having a height of 50 µm, and a top angle of 90 degrees) shown in (A) and (B) of FIG. 16 and the other one of the metal rolls was a roll having a random matte shape (surface roughness Ra = 1.6 µm).

**[Table 13]**

| | Raw materials | | Molding method and conditions | | | Film thickness | Surface roughness Ra of matte surface | Target pitch of inverted quadrangular pyramids | Target top angles of inverted quadrangular pyramids |
|---|---|---|---|---|---|---|---|---|---|
| | Resin composition | Content of diffusion agent | Molding method | Line speed | Compression line pressure | | | | |
| | | | | m/min | kgf/cm | um | um | um | Degree |
| Example 24 | 100.0 | 0.0 | Extrusion molding | 15 | 280 | 120 | 1.10 | 100 | 90 |
| Example 25 | 99.0 | 1.0 | Extrusion molding | 15 | 280 | 120 | 1.12 | 100 | 90 |
| Example 26 | 100.0 | 0.0 | Extrusion molding | 12 | 280 | 200 | 1.14 | 180 | 80 |
| Example 27 | 99.0 | 1.0 | Extrusion molding | 12 | 280 | 200 | 1.09 | 100 | 90 |

In Example 25, a light diffusion sheet of 120 µm in thickness as shown in Table 13 was manufactured with molding conditions shown in Table 13, by using the same aromatic polycarbonate resin containing a diffusion agent, which is used in Example 18, and the same two metal rolls used in Example 24.

In Example 26, a light diffusion sheet of 200 µm in thickness as shown in Table 13 was manufactured with molding conditions shown in Table 13, by using the same aromatic polycarbonate resin used in Example 24 and two metal rolls. One of the metal rolls was the roll used in Example 13 having, on its surface, shapes (square pyramids arranged at a pitch of 180 µm, each having a height of 107.3 µm, and a top angle of 80 degrees) and the other one of the metal rolls was a roll having a random matte shape (surface roughness Ra = 2.0 µm).

In Example 27, a light diffusion sheet of 200 µm in thickness as shown in Table 13 was manufactured with molding conditions shown in Table 13, by using the same aromatic polycarbonate resin containing a diffusion agent, which was used in Example 25, and two metal rolls. One of the metal rolls was the roll used in Examples 24 and 25 having, on its surface, square pyramid shapes and the other one of the metal rolls was a roll having a random matte shape (surface roughness Ra = 2.0 µm).

### <Evaluation of Examples 24 to 27>

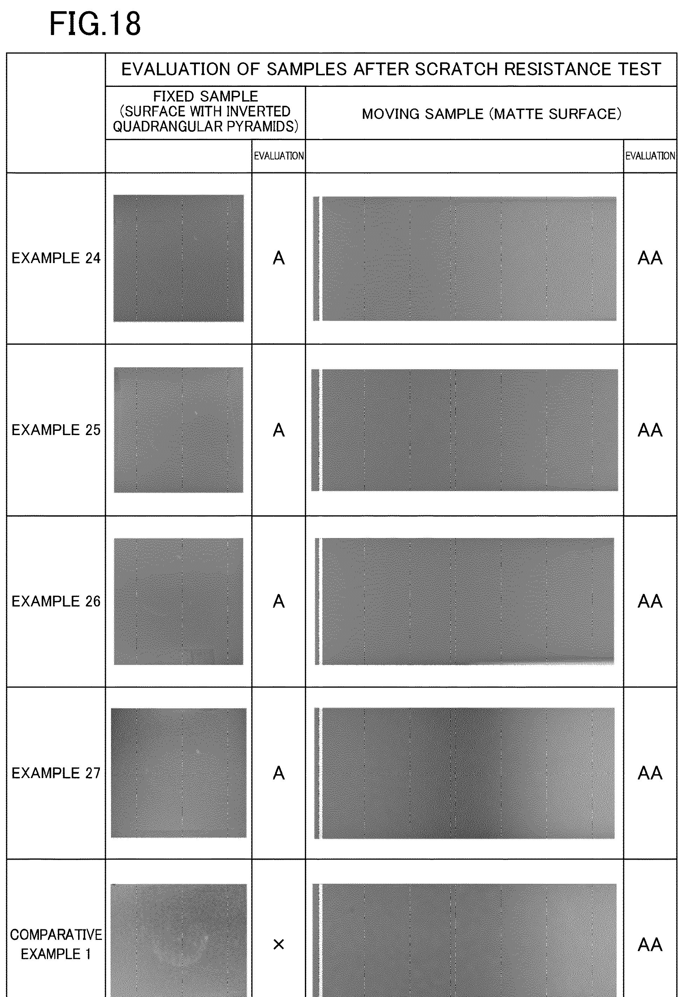

For the first light diffusion sheets 43 obtained in Examples 24 to 27, shapes, dimensions, angles, and the like of the elements obtained by the measurements are shown in Table 14. The measurement results of optical properties, the results of the scratch resistance tests, the evaluation results of the luminance and the luminance uniformity, as well as the overall evaluation results are shown in Table 15. Further, FIG. 18 shows the photographs of surfaces of the samples of Examples 24 to 27 and Comparative Example 1 after the scratch resistance test, and more specifically, shows the lower surfaces of the fixed samples (surfaces with the inverted quadrangular pyramids) and the upper surfaces of the moving samples (matte surfaces).

**[Table 14]**

| | Shape of surface will inverted square pyramids | | | | | | | | | | | | | | | | | |
|---|---|---|---|---|---|---|---|---|---|---|---|---|---|---|---|---|---|---|
| | Cross-sectional shapes of ridge along AxBx, AyBy | Maximum distance between straight lines connecting intersections and ridge | | | Vertical cross-sectional shape of ridge center portion | Height H from center point of inverted quadrangular pyramid to highest point of center portion of ridge | | | Width Wrx, Wry of curved portion of cross-section of ridge center portion | | | Pitch P of inverted quadrangular pyramid | | | Ratio Wr/P of width Wr of curved portion to pitch P | Angle θ formed by inclined surface of inverted square pyramid and diffusion sheet surface | | |
| | | dx | dy | Average | | Hx | Hy | Average H ofIIx, IIy | Wrx | Wry | Average Wr of W | Px | Py | Average P of Px, Py | Wr/P | θx | θy | Average θ of 0x, 0y |
| | | µm | µm | µm | | µm | µm | µm | µm | µm | µm | µm | µm | µm | % | Degree | Degree | Degree |
| Example 24 | Generally parabolic | 2.9 | 3.1 | 3.0 | Arc | 44.3 | 44.5 | 44.4 | 10.0 | 10.2 | 10.1 | 99.3 | 99.4 | 99.4 | 10.2 | 45.0 | 45.1 | 45.1 |
| Example 25 | Generally parabolic | 2.8 | 3.0 | 2.9 | Arc | 44.2 | 44.4 | 44.3 | 10.4 | 10.6 | 10.5 | 99.4 | 99.4 | 99.4 | 10.6 | 45.2 | 45.3 | 45.3 |
| Example 26 | Generally parabolic | 3.1 | 3.3 | 3.2 | Arc | 101 | 101 | 101 | 9.0 | 9.0 | 9.0 | 186 | 186 | 186.0 | 4.8 | 48.6 | 48.6 | 48.6 |
| Example 27 | Generally parabolic | 2.5 | 2.5 | 2.5 | Arc | 44.6 | 44.5 | 44.6 | 10.4 | 10.8 | 10.6 | 99.4 | 99.4 | 99.4 | 10.7 | 45.0 | 45.2 | 45.1 |

**[Table 15]**

| | Optical properties | | Evaluation of physical properties | | | | Overall evaluation |
|---|---|---|---|---|---|---|---|
| | Haze (Light from certain surface of inverted quadrangular pyramid) | Light transmittance (450nm) (Light from certain surface of inverted quadrangular pyramid) | | | | | |
| | | | Scratch resistance test | | Luminance uniformity | Luminance | |
| | % | % | Surface with inverted quadrangular pyramids | Matte surface | | | |
| Example 24 | 93.5 | 96.9 | A | AA | A | A | A |
| Example 25 | 94.5 | 92.6 | A | AA | C | B | C |
| Example 26 | 93.9 | 113 | A | AA | AA | A | AA |
| Example 27 | 94.5 | 89.9 | A | AA | C | B | C |

It should be understood from the results shown in Table 14 and Table 15 that, in the first light diffusion sheets 43 obtained in Examples 24 to 27, having recesses 22 formed in an inverted square pyramid shape, the maximum height difference d between the straight line connecting the intersections 23a and the ridge 23 is 2.7 µm or more, and the ridge 23 between the intersections 23a has a generally parabolically recessed shape. Therefore, wear and damage attributed to the ridge 23 are less likely even if any of these first light diffusion sheets 43 is used with another optical sheet, consequently yielding favorable results in the scratch resistance test not only for the matte surfaces (the upper surfaces of the moving samples) but also for the surfaces with inverted quadrangular pyramids (the lower surfaces of the fixed samples), as shown in FIG. 18. In Comparative Example 1, on the other hand, the maximum height difference d is 0 µm, resulting in a horizontal shape of the ridge 23 between the intersections 23a without a recessed portion of the ridge 23 as hereinabove mentioned (see Table 2 and the like). Therefore, for the surface with the inverted quadrangular pyramids (the lower surface of the fixed sample), scratches attributed to the ridge 23 are clearly visible as the result of the scratch resistance test, as shown in FIG. 18, and the scratch resistance is poor.

Note that, in each of Examples 24 and 25, the relatively thin thickness of the first light diffusion sheet 43 causes a relatively large recess in the ridge 23, and in Example 26, the relatively large inverted quadrangular pyramid shape of the recess 22 causes a relatively large recess in the ridge 23.

Further, the ratio Wr/P is within a range from approximately 5% to 11% and the steep top portion of the ridge 23 is maintained, resulting in favorable luminance uniformities, in each of Examples 24 to 27.

Based on the above results, Example 24 was rated "A," Examples 25 and 27 were rated "C," and Example 26 was rated "AA" which was the most excellent.

### (Other Embodiments)

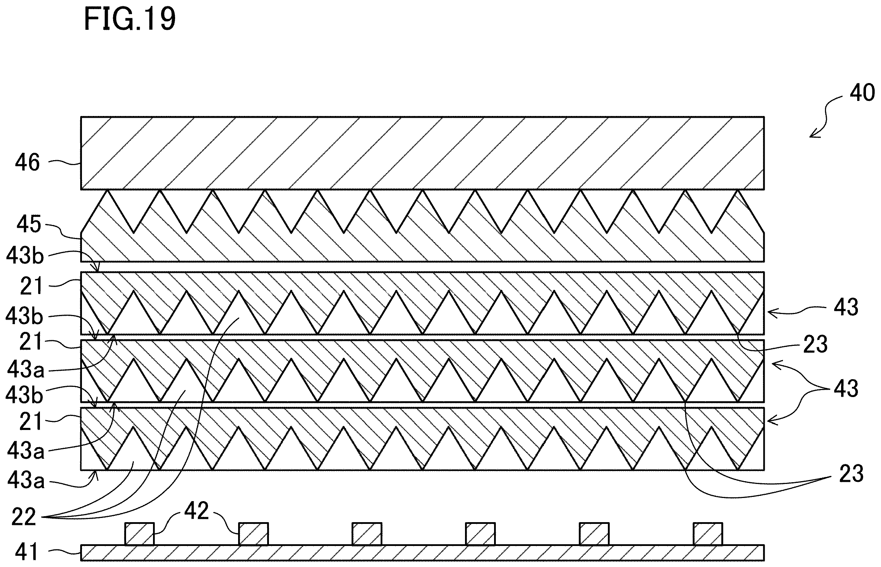

For example, instead of the backlight unit 40 of the above-described embodiment shown in FIG. 2 including combination of two layers of first light diffusion sheets 43 and the second light diffusion sheet 44, three layers of the first light diffusion sheets 43 may be used as in the case of the backlight unit 40 of the modification shown in FIG. 19, or four or more first light diffusion sheets 43 may be layered. In a case of layering three or more first light diffusion sheets 43, the light diffusion sheet 43 closest to the display screen 50a (i.e., the first prism sheet 45) may contain a diffusion agent, while the other light diffusion sheets 43 may contain substantially no diffusion agent, in terms of a trade-off between the effect of reflection and refraction by the substantially inverted polygon pyramid shapes and the light diffusion effect by the diffusion agent. This way, the luminance uniformity can be yet further improved.

### DESCRIPTION OF REFERENCE CHARACTERS

- 1: TFT Substrate
- 2: CF Substrate
- 3: Liquid Crystal Layer
- 5: Liquid Crystal Display Panel
- 6: First Polarizing Plate
- 7: Second Polarizing Plate
- 21: Base Material Layer
- 22: Recess
- 22a: Center
- 23: Ridge
- 23a: Intersection
- 23b: Lowest Point
- 40: Backlight Unit
- 41: Reflective Sheet
- 42: Small Light Source
- 43: First Light Diffusion Sheet
- 43a: First Surface
- 43b: Second Surface
- 44: Second Light Diffusion Sheet
- 44a: First Surface
- 44b: Second Surface
- 45: First Prism Sheet
- 46: Second Prism Sheet
- 50: Liquid Crystal Display Device
- 50a: Display Screen

## Claims

1. A light diffusion sheet comprising, at least in its first surface (43), a plurality of recesses (22) formed in a substantially inverted polygon pyramid or in a substantially inverted truncated polygon pyramid, wherein:
a ridge (23) parting the plurality of recesses (22) has a recessed shape between intersections of the ridge (23), with respect to a straight line connecting the intersections;
a ratio Wr/P is 0.3 or less, where P is an arrangement pitch of the plurality of recesses (22) and Wr is a dimension occupied by a curved portion at a top portion of the ridge (23) in an arrangement direction of the plurality of recesses (22);
a maximum height difference d between the straight line and the ridge (23) is 1 µm or more and 10 µm or less; and
the ridge between the intersections is recessed in a parabolic shape, an arc shape, a triangular shape, or a trapezoidal shape

2. The light diffusion sheet of claim 1, wherein
the maximum height difference d is 1.5 µm or more and 7 µm or less.

3. The light diffusion sheet of claim 2, wherein
the maximum height difference d is 2.5 µm or more and 5 µm or less.

4. The light diffusion sheet of any one of claims 1 to 3, wherein
the ratio Wr/P is 0.2 or less.

5. The light diffusion sheet according to claim 4, wherein
the ratio Wr/P is 0.1 or less.

6. The light diffusion sheet of any one of claims 1 to 3, wherein
the arrangement pitch P is 50 µm or more and 500 µm or less; and
an angle formed between a wall surface of each of the plurality of recesses (22) and a sheet surface of the light diffusion sheet is 40 degrees or more and 65 degrees or less.

7. The light diffusion sheet of any one of claims 1 to 3, wherein
the plurality of recesses (22) are each formed in a substantially inverted quadrangular pyramid or a substantially inverted truncated quadrangular pyramid shape;
the ridge (23) extends in a first direction and a second direction;
the maximum height difference d is an average of a maximum height difference dx between the straight line and the ridge (23) in the first direction and a maximum height difference dy between the straight line and the ridge (23) in the second direction;
the arrangement pitch P is an average of an arrangement pitch Px of the plurality of recesses (22) in the first direction and an arrangement pitch Py of the plurality of recesses (22) in the second direction; and
the dimension Wr is an average of a dimension Wrx occupied by the curved portion at the top portion of the ridge (23) in the first direction and a dimension Wry occupied by the curved portion at the top portion of the ridge (23) in the second direction.

8. The light diffusion sheet of any one of claims 1 to 3, wherein
the plurality of recesses (22) are provided only in the first surface (43a); and
the second surface (43b) is a matte surface.

9. A backlight unit (40) comprising:
light sources (42); and
the light diffusion sheet of any one of claims 1 to 3.

10. The backlight unit (40) of claim 9, wherein
the light sources (42) are arranged on a reflective sheet (41).

11. The backlight unit (40) of claim 9, wherein
the light diffusion sheet includes a plurality of light diffusion sheets layered.

12. The backlight unit (40) of claims 11, wherein
the light diffusion sheet includes three or more light diffusion sheets layered.

13. The backlight unit (40) of claim 12, wherein
of the three or more light diffusion sheets, the light diffusion sheet furthest from the light sources (42) contains a diffusion agent, and the other light diffusion sheets contain substantially no diffusion agent.

14. A liquid crystal display device (50), comprising:
the backlight unit (40) of claim 9; and
a liquid crystal display panel (5).

15. An information apparatus, comprising
the liquid crystal display device (50) of claim 14.

16. A method of manufacturing the light diffusion sheet of any one of claims 1 to 3, comprising
extrusion-molding of the light diffusion sheet at a line speed of 10 m/min or more and 30 m/min or less, with a compression line pressure of 100 kgf/cm or more and 500 kgf/cm or less.

## Patentansprüche

1. Lichtdiffusionsfolie, welche zumindest in ihrer ersten Oberfläche (43) eine Vielzahl von Aussparungen (22) aufweist, die in einer im Wesentlichen umgekehrten vieleckigen Pyramide oder in einer im Wesentlichen umgekehrten kegelstumpfförmigen vieleckigen Pyramide gebildet sind, wobei:
ein Grat (23), der die Vielzahl von Aussparungen (22) teilt, zwischen Schnittpunkten des Grats (23) bezüglich einer geraden Linie, die die Schnittpunkte verbindet, eine ausgesparte Form aufweist;
ein Verhältnis Wr/P 0,3 oder weniger beträgt, wobei P ein Anordnungsabstand der Vielzahl von Aussparungen (22) ist und Wr eine Abmessung ist, die von einem gekrümmten Abschnitt an einem oberen Abschnitt des Grats (23) in einer Anordnungsrichtung der Vielzahl von Aussparungen (22) belegt wird;
eine maximale Höhendifferenz d zwischen der geraden Linie und dem Grat (23) 1 µm oder mehr und 10 µm oder weniger beträgt; und
der Grat zwischen den Schnittpunkten in einer Parabelform, einer Bogenform, einer Dreieckform oder einer Trapezform ausgespart ist.

2. Lichtdiffusionsfolie nach Anspruch 1, wobei
die maximale Höhendifferenz d 1,5 µm oder mehr und 7 µm oder weniger beträgt.

3. Lichtdiffusionsfolie nach Anspruch 2, wobei
die maximale Höhendifferenz d 2,5 µm oder mehr und 5 µm oder weniger beträgt.

4. Lichtdiffusionsfolie nach einem der Ansprüche 1 bis 3, wobei das Verhältnis Wr/P 0,2 oder weniger beträgt.

5. Lichtdiffusionsfolie nach Anspruch 4, wobei
das Verhältnis Wr/P 0,1 oder weniger beträgt.

6. Lichtdiffusionsfolie nach einem der Ansprüche 1 bis 3, wobei
der Anordnungsabstand P 50 µm oder mehr und 500 µm oder weniger beträgt; und
ein Winkel, der zwischen einer Wandfläche jeder der Vielzahl von Aussparungen (22) und einer Folienfläche der Lichtdiffusionsfolie 40 Grad oder mehr und 65 Grad oder weniger beträgt.

7. Lichtdiffusionsfolie nach einem der Ansprüche 1 bis 3, wobei
die Vielzahl von Aussparungen (22) jeweils in einer im Wesentlichen umgekehrten viereckigen Pyramide oder einer im Wesentlichen umgekehrten kegelstumpfförmigen viereckigen Pyramidenform gebildet sind;
sich der Grat (23) in einer ersten Richtung und einer zweiten Richtung erstreckt;
die maximale Höhendifferenz d ein Durchschnitt einer maximalen Höhendifferenz dx zwischen der geraden Linie und dem Grat (23) in der ersten Richtung und einer maximalen Höhendifferenz dy zwischen der geraden Linie und dem Grat (23) in der zweiten Richtung ist;
der Anordnungsabstand P ein Durchschnitt eines Anordnungsabstands Px der Vielzahl von Aussparungen (22) in der ersten Richtung und eines Anordnungsabstand Py der Vielzahl von Aussparungen (22) in der zweiten Richtung ist; und
die Abmessung Wr ein Durchschnitt einer Abmessung Wrx ist, die von dem gekrümmten Abschnitt an dem oberen Abschnitt des Grats (23) in der ersten Richtung belegt ist, und einer Abmessung Wry ist, die von dem gekrümmten Abschnitt an dem oberen Abschnitt des Grats (23) in der zweiten Richtung belegt ist.

8. Lichtdiffusionsfolie nach einem der Ansprüche 1 bis 3, wobei
die Vielzahl von Aussparungen (22) nur in der ersten Oberfläche (43a) bereitgestellt sind; und
die zweite Oberfläche (43b) eine matte Oberfläche ist.

9. Hintergrundbeleuchtungseinheit (40) umfassend:
Lichtquellen (42); und
die Lichtdiffusionsfolie nach einem der Ansprüche 1 bis 3.

10. Hintergrundbeleuchtungseinheit (40) nach Anspruch 9, wobei
die Lichtquellen (42) auf einer reflektierenden Folie (41) angeordnet sind.

11. Hintergrundbeleuchtungseinheit (40) nach Anspruch 9, wobei
die Lichtdiffusionsfolie eine Vielzahl von geschichteten Lichtdiffusionsfolien einschließt.

12. Hintergrundbeleuchtungseinheit (40) nach Anspruch 11, wobei
die Lichtdiffusionsfolie drei oder mehr geschichtete Lichtdiffusionsfolien einschließt.

13. Hintergrundbeleuchtungseinheit (40) nach Anspruch 12, wobei
von den drei oder mehr Lichtdiffusionsfolien die Lichtdiffusionsfolie, die am weitesten von den Lichtquellen (42) entfernt ist, ein Diffusionsmittel enthält, und die anderen Lichtdiffusionsfolien im Wesentlichen kein Diffusionsmittel enthalten.

14. Flüssigkristallanzeigevorrichtung (50), umfassend:
die Hintergrundbeleuchtungseinheit (40) nach Anspruch 9; und
ein Flüssigkristallanzeigepaneel (5).

15. Informationsvorrichtung, umfassend
die Flüssigkristallanzeigevorrichtung (50) nach Anspruch 14.

16. Verfahren zum Herstellen der Lichtdiffusionsfolie nach einem der Ansprüche 1 bis 3, umfassend
Formpressen der Lichtdiffusionsfolie mit einer Liniengeschwindigkeit von 10 m/Min oder mehr und 30 m/Min oder weniger, mit einem Kompressionsliniendruck von 100 kgf/cm oder mehr und 500 kgf/cm oder weniger.

## Revendications

1. Feuille de diffusion de lumière comprenant, au moins dans sa première surface (43), une pluralité d'évidements (22) formés en une pyramide polygonale sensiblement inversée ou en une pyramide polygonale tronquée sensiblement inversée, dans laquelle :
une crête (23) divisant la pluralité d'évidements (22) présente une forme évidée entre des intersections de la crête (23), par rapport à une ligne droite reliant les intersections ;
un rapport Wr/P est de 0,3 ou moins, où P est un pas d'agencement de la pluralité d'évidements (22) et Wr est une dimension occupée par une partie incurvée au niveau d'une partie supérieure de la crête (23) dans une direction d'agencement de la pluralité d'évidements (22) ;
une différence de hauteur maximale d entre la ligne droite et la crête (23) est de 1 µm ou plus et de 10 µm ou moins ; et
la crête entre les intersections est évidée en une forme parabolique, une forme d'arc, une forme triangulaire, ou une forme trapézoïdale.

2. Feuille de diffusion de lumière selon la revendication 1, dans laquelle la différence de hauteur maximale est de 1,5 µm ou plus et de 7 µm ou moins.

3. Feuille de diffusion de lumière selon la revendication 2, dans laquelle la différence de hauteur maximale d est de 2,5 µm ou plus et de 5 µm ou moins.

4. Feuille de diffusion de lumière selon l'une quelconque des revendications 1 à 3, dans laquelle le rapport Wr/P est de 0,2 ou moins.

5. Feuille de diffusion de lumière selon la revendication 4, dans laquelle le rapport Wr/P est de 0,1 ou moins.

6. Feuille de diffusion de lumière selon l'une quelconque des revendications 1 à 3, dans laquelle
le pas d'agencement P est de 50 µm ou plus et de 500 µm ou moins ; et
un angle formé entre une surface de paroi de chacun des évidements de la pluralité d'évidements (22) et une surface de feuille de la feuille de diffusion de lumière est de 40 degrés ou plus et de 65 degrés ou moins.

7. Feuille de diffusion de lumière selon l'une quelconque des revendications 1 à 3, dans laquelle
les évidements de la pluralité d'évidements (22) sont chacun formés en une pyramide sensiblement inversée ou une forme pyramidale quadrangulaire tronquée sensiblement inversée ;
la crête (23) s'étend dans une première direction et une seconde direction ;
la différence de hauteur maximale d est une moyenne d'une différence de hauteur maximale dx entre la ligne droite et la crête (23) dans la première direction et une différence de hauteur minimale entre la ligne droite et la crête (23) dans la seconde direction ;
le pas d'agencement P est une moyenne d'un pas d'agencement Px de la pluralité d'évidements (22) dans la première direction et un pas d'agencement Py de la pluralité d'évidements (22) dans la seconde direction ; et
la dimension Wr est une moyenne d'une dimension Wrx occupée par la partie incurvée au niveau de la partie supérieure de la crête (23) dans la première direction et une dimension Wry occupée par la partie incurvée au niveau de la partie supérieure de la crête (23) dans la seconde direction.

8. Feuille de diffusion de lumière selon l'une quelconque des revendications 1 à 3, dans laquelle
la pluralité d'évidements (22) est disposée uniquement dans la première surface (43a) ; et
la seconde surface (43b) est une surface mate.

9. Unité de rétroéclairage (40) comprenant :
des sources de lumière (42) ; et
la feuille de diffusion de lumière selon l'une quelconque des revendications 1 à 3.

10. Unité de rétroéclairage (40) selon la revendication 9, dans laquelle
les sources de lumière (42) sont agencées sur une feuille réfléchissante (41).

11. Unité de rétroéclairage (40) selon la revendication 9, dans laquelle
la feuille de diffusion de lumière inclut une pluralité de feuilles de diffusion de lumière en couches.

12. Unité de rétroéclairage (40) selon la revendication 11, dans laquelle
la feuille de diffusion de lumière inclut trois ou plus de trois feuilles de diffusion de lumière en couches.

13. Unité de rétroéclairage (40) selon la revendication 12, dans laquelle
des trois ou plus de trois feuilles de diffusion de lumière, la feuille de diffusion de lumière la plus éloignée des sources de lumière (42) contient un agent de diffusion, et les autres feuilles de diffusion de lumière ne contiennent sensiblement pas d'agent de diffusion.

14. Dispositif d'affichage à cristaux liquides (50), comprenant :
l'unité de rétroéclairage (40) selon la revendication 9 ; et
un panneau d'affichage à cristaux liquides (5).

15. Appareil d'informations, comprenant
le dispositif d'affichage à cristaux liquides (50) selon la revendication 14.

16. Procédé de fabrication de la feuille de diffusion de lumière selon l'une quelconque des revendications 1 à 3, comprenant
le moulage par extrusion de la feuille de diffusion de lumière à une vitesse de ligne de 10 m/min ou plus et de 30 m/min ou moins, avec une pression de ligne de compression de 100 kgf/cm ou plus et de 500 kgf/cm ou moins.
